# EUROPÄISCHE PATENTSCHRIFT

(11) **EP 2 012 039 B1**
(45) Veröffentlichungstag und Bekanntmachung des Hinweises auf die Patenterteilung: **20.06.2012**
(21) Anmeldenummer: 08012080.1
(22) Anmeldetag: 04.07.2008
(51) Int. Cl.: F16F 7/10, F16F 7/104, G10K 11/172

(54) **Vorrichtung zur Reduzierung von Klangstöreffekten von HiFi-Gerätegehäusen**
Device for reducing noise interference in HiFi device casings
Dispositif de réduction des effets nuisibles du bruit d'appareils ménagers HiFi

(30) Priorität: 06.07.2007 DE 102007031573
(43) Veröffentlichungstag der Anmeldung: 07.01.2009
(73) Patentinhaber: finite elemente GmbH, 59929 Brilon (DE)
(72) Erfinder: Fernandes, Luis, 59929 Brilon-Wülfte (DE); Brockhoff, Bernd, 59939 Olsberg-Elpe (DE)
(74) Vertreter: Brune, Axel

(56) Entgegenhaltungen:
- EP-A1- 0 337 077
- DE-A1- 2 163 798
- DE-A1- 2 610 212
- US-A- 5 583 324
- US-A1- 2007 014 418

## Beschreibung

Die vorliegende Erfindung betrifft eine Vorrichtung zur Reduzierung von Klangstöreffekten von HiFi-Gerätegehäusen, gemäß dem Oberbegriff des Anspruchs 1, sowie die Verwendung einer erfindungsgemäßen Vorrichtung zur Reduzierung von Klangstöreffekten von HiFi-Gerätegehäusen gemäß Anspruch 14.

Während der Musikwiedergabe durch eine HiFi-Anlage im Wohnraum werden seitens der Lautsprecher Luftschallwellen erzeugt, die sich durch die Raumluft zum menschlichen Gehör fortpflanzen und die Musik wahrnehmbar machen. Die tieferen Frequenzen besitzen einen großen Streuwinkeleffekt, so dass z.B. auch bei lautsprecherparalleler Positionierung der HiFi-Geräte deren Gehäuse durch die Schallwellen angeregt werden. Eben in diesen tieferen Frequenzbereichen, zwischen 100 Hz und 500 Hz, liegen nun auch die ersten Eigenfrequenzen der HiFi-Gerätegehäuseplatten, so dass diese in Resonanzschwingungen geraten und damit einen für das gesamte Klangbild der Anlage störenden Rückkopplungseffekt erzeugen.

Um diese negativen Effekte zumindest teilweise einzudämmen ist es bekannt zum Beispiel aus der DE 2 163 798, Verstimmungen der Eigenfrequenzlagen der Gerätegehäuseplatten vorzunehmen, etwa durch einfache Masseblöcke, die auf Gerätegehäuseplatten aufgelegt werden. Diese Maßnahme führt jedoch lediglich dazu, dass die neu generierten Eigenfrequenzen dennoch durch das breitbandige Musikspektrum tangiert werden, so dass sich die Klangstöreffekte lediglich verlagern.

Die Aufgabe der vorliegenden Erfindung liegt nunmehr darin, eine Vorrichtung zur Reduzierung von Klangstöreffekten von HiFi-Gerätegehäusen vorzuschlagen, mit der klangstörende Rückkopplungseffekte effektiv, insbesondere über einen großen Frequenzbereich, reduziert werden können.

Erfindungsgemäß wird diese Aufgabe durch eine Vorrichtung mit den kennzeichnenden Merkmalen des Anspruchs 1 gelöst.

Dadurch, dass die erfindungsgemäße Vorrichtung mindestens einen Resonator und eine Halterung aufweist, wobei die Halterung mit einer Gehäusekontaktfläche zur schwingungsübertragenden Verbindung mit dem HiFi-Gerätegehäuse und einem Anschluss für den Resonator ausgestattet ist, kann die Schwingungsenergie eines HiFi-Gerätegehäuses über einen breites Frequenzspektrum effektiv reduziert werden, insbesondere durch den Resonator in Wärmeenergie umgewandelt werden. Der Energieverlust der Gehäuseplatte des HiFi-Gerätes führt zur Minimierung des klangstörenden Rückkopplungseffektes.

In einer vorteilhaften Ausgestaltung der vorgeschlagenen Erfindung kann vorgesehen sein, dass der Resonator mindestens einen länglichen elastischen Balken umfasst. Denkbar sind aber auch andere elastische Elemente, wie beispielsweise ein runder oder ovaler Stab, in seiner Ausführung massiv oder hohl.

Auch kann vorteilhafterweise vorgesehen sein, dass es sich bei dem Resonator um einen Resonatorstern handelt, umfassend eine zentrale Bohrung zum Anschluss an die Halterung und eine sternförmige Anordnung von länglichen elastischen Balken. Auf diese Weise kann ein in Schwingung versetzbarer Resonator bereitgestellt werden, der bei hohem Wirkungsgrad nur einen geringen Bauraum benötigt und durch die zentrale Bohrung auf einfache Art und Weise mit der Halterung verbindbar ist.

Zur Abstimmung des Resonators auf typische Frequenzen, mit denen ein von einer Musikwiedergabe der Lautsprecherboxen angeregtes HiFi-Gerätegehäuse typischerweise schwingt, kann vorteilhafterweise vorgesehen sein, dass mindestens einer der elastischen Balken, insbesondere der Resonatorstern, zumindest abschnittsweise mit einem additiven Dämpfungsmaterial ausgestattet ist. Durch die Ausstattung des Balkens mit einem Dämpfungsmaterial können im Ergebnis vorzugsweise Nachbarresonanzen getilgt werden.

In einer vorteilhaften Ausgestaltung der Erfindung kann vorgesehen sein, dass der mindestens eine elastische Balken, insbesondere der Resonatorstern, eine erste Lage aus Edelstahl mit einer Dicke von vorzugsweise t = 1 mm und eine zweite Lage aus einer Dämpfungsfolie mit einer Dicke von t = 2 mm umfasst. Eine derartige Ausgestaltung des elastischen Balkens hat sich als besonders vorteilhaft erwiesen, um Schwingungen über einen großen Frequenzbereich zu reduzieren. Es ergibt sich hieraus eine Bandbreite von ± 25%, ausgehend von der zu Grunde liegenden Eigenresonanzfrequenz.

Es kann ferner vorgesehen sein, dass das Dämpfungsmaterial als Dämpfungsfolie auf dem elastischen Balken aufgebracht ist, oder dass es sich um einen zumindest abschnittsweise hohlen Balken handelt, wobei das Dämpfungsmaterial innerhalb des Hohlraums angebracht ist. Insbesondere die letzte Alternative bietet sich an, wenn die erfindungsgemäße Vorrichtung nicht mit einem Gehäuse ausgestattet sein soll und der Resonator, insbesondere der Resonatorstern, entsprechend sichtbar ist. Die erste Alternative zeichnet sich durch die vorteilhafte Herstellbarkeit und auch die Anpassbarkeit der elastischen Balken hinsichtlich ihrer Dämpfungseigenschaften aus, da die Dämpfungsfolie grundsätzlich unmittelbar zugänglich bleibt und ausgetauscht werden könnte.

In einer vorteilhaften Ausgestaltung der vorgeschlagenen erfindungsgemäßen Vorrichtung kann vorgesehen sein, dass die Halterung einen Träger und ein Fußteil umfasst, wobei der Träger einen scheibenförmigen Grundkörper, eine erste Gewindestange und eine zweite Gewindestange aufweist, wobei das Fußteil eine Gewindebohrung und die Gehäusekontaktfläche aufweist, wobei der Resonatorstern mit der Bohrung auf die erste Gewindestange aufgesteckt ist und mit einer Mutter fixiert ist, wobei das Fußteil auf die zweite Gewindestange aufgeschraubt ist. Durch die Zweiteilung des Halters ergibt sich eine bessere Montagemöglichkeit in Zusammenschau mit dem noch näher zu beschreibenden Gehäuse der erfindungsgemäßen Vorrichtung.

Es kann weiterhin vorteilhafterweise vorgesehen sein, dass die erfindungsgemäße Vorrichtung ein Gehäuse, vorzugsweise ein hohlzylinderförmiges Gehäuse, mit einem Innenraum zur Aufnahme des Resonators, insbesondere des Resonatorsterns, aufweist. Die erfindungsgemäße Vorrichtung kommt grundsätzlich auch ohne ein Gehäuse aus und kann entsprechend nur aus dem Resonator, insbesondere dem Resonatorstern, und der Halterung bestehen. Aus optischen Gründen, aber auch aus Gründen der Handhabung und der Abschirmung möglicherweise auftretenden Störgeräuschen durch die vibrierenden elastischen Elemente, ist es von Vorteil, den Resonator zu kapseln.

Auch kann vorteilhafterweise vorgesehen sein, dass das Gehäuse der Vorrichtung eine erste Gehäusehälfte und eine zweite Gehäusehälfte aufweist, wobei die Gehäusehälften lösbar miteinander verbunden sind. Diese Maßnahme dient im Wesentlichen der Montageerleichterung. Auch können gegebenenfalls nachträglich Abstimmungsmaßnahmen an dem Resonator, insbesondere dem Resonatorstern, vorgenommen werden, beispielsweise durch Anbringen von Dämpfungsfolien.

Ferner kann vorteilhafterweise vorgesehen sein, dass das Gehäuse über ein Verbindungsmittel mit der Halterung verbunden ist, welches eine akustisch entkoppelte Verbindung zwischen Halterung und Gehäuse ermöglicht.

In einer vorteilhaften Ausgestaltung der erfindungsgemäßen Vorrichtung kann vorgesehen sein, dass das Verbindungsmittel eine hohlzylinderförmige Kontakthülse, insbesondere eine elastische Kunststoffhülse, eine Durchgangsbohrung mit einer umlaufenden Nut in der zweiten Gehäusehälfte, einen O-Ring, insbesondere einen Gummiring, sowie eine umlaufende Nut in dem Fußteil umfasst, wobei die hohlzylinderförmige Kontakthülse auf der dem Innenraum zugewandten Seite der ersten Gehäusehälfte angebracht ist und ein Abschnitt der ersten Gewindestange in der Kontakthülse aufgenommen ist, wobei die Halterung über das Fußteil mit dem Gehäuse, insbesondere mit der zweiten Gehäusehälfte, verbunden ist, wobei der O-Ring abschnittsweise in der Nut des Fußteils und abschnittsweise in der Nut der Durchgangsbohrung aufgenommen ist. Dadurch, dass die Verbindung zwischen der Halterung und dem Gehäuse ausschließlich durch Kunststoff-, vorzugsweise Gummielemente hergestellt wird, kann das Gehäuse akustisch von der Halterung und dem Resonator, insbesondere dem Resonatorstern, abgekoppelt werden.

Um sicherzustellen, dass nicht das Gehäuse der erfindungsgemäßen Vorrichtung, sondern ausschließlich die Halterung und damit der Resonator, insbesondere der Resonatorstern, durch die Schwingungen der Gehäuseoberfläche des HiFi-Geräts angeregt wird, ist vorzugsweise vorgesehen, dass das Fußteil zumindest abschnittsweise aus der Durchgangsbohrung herausragt, wobei die Gehäusekontaktfläche von der Gehäuseoberfläche der erfindungsgemäßen Vorrichtung beabstandet ist.

Vorteilhafterweise kann ebenfalls vorgesehen sein, dass die Eigenresonanzfrequenz des Resonators, insbesondere des Resonatorsterns, auf die Anregungsfrequenz des HiFi-Gerätegehäuses abgestimmt ist, insbesondere 400 Hz beträgt. Insbesondere die Auslegung der Eigenresonanzfrequenz des Resonators, insbesondere des Resonatorsterns, auf 400 Hz hat sich als besonders vorteilhaft zur Reduzierung der Schwingungsenergie von HiFi-Gerätegehäusen erwiesen, die typischerweise von einer Musikwiedergabe der Lautsprecherboxen in Schwingung versetzt werden.

Eine weitere Aufgabe der vorliegenden Erfindung liegt darin, eine Verwendung der erfindungsgemäßen Vorrichtung vorzuschlagen.

Erfindungsgemäß wird diese Aufgabe dadurch gelöst, dass die erfindungsgemäße Vorrichtung zur Reduzierung von Klangstöreffekten von HiFi-Gerätegehäusen verwendet wird. Vorzugsweise wird die Vorrichtung einfach auf dem HiFi-Gerätegehäuse abgestellt, reduziert die Schwingungsenergie des HiFi-Gerätegehäuses und es stellt sich der erwünschte Effekt, der Reduzierung von Klangstöreffekten von HiFi-Gerätegehäusen ein.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine erfindungsgemäße Vorrichtung in einer seitlichen geschnittenen Ansicht;
- Fig. 2: eine erfindungsgemäße Vorrichtung in einer perspektivischen Ansicht mit geöffnetem Gehäuse zur Illustration des Gehäuseinhaltes;
- Fig. 3: eine erste Gehäusehälfte einer erfindungsgemäßen Vorrichtung;
- Fig. 4: eine zweite Gehäusehälfte einer erfindungsgemäßen Vorrichtung mit Halterung und Resonatorstern;
- Fig. 5: eine erste Gehäusehälfte einer erfindungsgemäßen Vorrichtung in einer geschnittenen Ansicht;
- Fig. 6: eine zweite Gehäusehälfte einer erfindungsgemäßen Vorrichtung in einer geschnittenen Ansicht, mit Ausschnittsvergrößerungen "X" und "Y";
- Fig. 7: ein Resonatorstern einer erfindungsgemäßen Vorrichtung in einer Draufsicht;
- Fig. 8: ein Träger einer Halterung einer erfindungsgemäßen Vorrichtung in einer Seitenansicht;
- Fig. 9: eine Mutter einer Halterung einer erfindungsgemäßen Vorrichtung in einer Draufsicht und einer geschnittenen Ansicht;
- Fig. 10: ein Fußteil einer erfindungsgemäßen Vorrichtung in einer geschnittenen Ansicht;
- Fig. 11: eine erfindungsgemäße Vorrichtung in einer perspektivischen Ansicht von oben;
- Fig. 12: eine erfindungsgemäße Vorrichtung in einer perspektivischen Ansicht von der Seite;
- Fig. 13: eine erfindungsgemäße Vorrichtung in einer perspektivischen Ansicht von unten;
- Fig. 14: eine schematische Illustration der Wirkungsweise einer erfindungsgemäßen Vorrichtung in einer seitlichen Schnittansicht;
- Fig. 15: eine schematische Illustration der Wirkungsweise einer erfindungsgemäßen Vorrichtung in einer perspektivischen Ansicht;
- Fig. 16: eine Computersimulation einer Platte, insbesondere eines HiFi-Gerätegehäuses, während der Anregung mit ihrer Grundeigenfrequenz;
- Fig. 17: eine Computersimulation einer Platte während der Anregung ihrer Grundeigenfrequenz gemäß Fig. 16 mit einer erfindungsgemäßen Vorrichtung;
- Fig. 18: eine Gegenüberstellung von Beschleunigungsamplituden über musikalischem Frequenzband eines HiFi-Gerätegehäuses mit vier verschiedenen Maßnahmen zur Reduzierung von Schwingungsenergie;
- Fig. 19: Beschleunigungsamplituden-Frequenz-Spektrum der Gehäuseoberseite eines CD-Players während der Musikwiedergabe, ohne eine erfindungsgemäße Vorrichtung;
- Fig. 20: Beschleunigungsamplituden-Frequenz-Spektrum der Gehäuseoberseite eines CD-Players während der Musikwiedergabe, mit erfindungsgemäßer Vorrichtung;
- Fig. 21: Beschleunigungsamplituden-Frequenz-Spektrum der Gehäuseoberseite eines auf dem pagode master reference - Rack mit Cerapuc-Stellfüssen gelagerten CD-Players während der Musikwiedergabe, ohne eine erfindungsgemäße Vorrichtung auf der Gehäuseoberseite des Verstärkers oder CD-Players;
- Fig. 22: Beschleunigungsamplituden-Frequenz-Spektrum der Gehäuseoberseite eines auf dem pagode master reference - Rack mit Cerapuc-Stellfüssen gelagerten CD-Players während der Musikwiedergabe, mit einer erfindungsgemäßen Vorrichtungen auf der Gehäuseoberseite des Verstärkers und des CD-Players;
- Fig. 23: Beschleunigungsamplituden-Frequenz-Spektrum von Gehäuseschwingungen an Tuner und CD-Player bei Wiedergabe der 57. Sekunde "Play with fire" - The Rolling Stones, Aufbau "Basis" mit Cerapuc-Stellfüssen, ohne eine erfindungsgemäße Vorrichtung auf der Gehäuseoberfläche von Verstärker und CD-Player;
- Fig. 24: Beschleunigungsamplituden-Frequenz-Spektrum von Gehäuseschwingungen an Tuner und CD-Player bei Wiedergabe der 57. Sekunde "Play with fire" - The Rolling Stones, Aufbau "Basis" mit Cerapuc-Stellfüssen, mit erfindungsgemäßer Vorrichtung auf der Gehäuseoberfläche von Verstärker und CD-Player;
- Fig. 25: Beschleunigungsamplituden-Frequenz-Spektrum von Gehäuseschwingungen an Tuner und CD-Player bei Wiedergabe der 57. Sekunde "Play with fire" - The Rolling Stones, Aufbau "Basis" ohne Cerapuc-Stellfüsse, ohne eine erfindungsgemäße Vorrichtung auf der Gehäuseoberfläche von Verstärker und CD-Player;
- Fig. 26: Beschleunigungsamplituden-Frequenz-Spektrum von Gehäuseschwingungen an Tuner und CD-Player bei Wiedergabe der 57. Sekunde "Play with fire" - The Rolling Stones, Aufbau "Basis" ohne Cerapuc-Stellfüsse, mit erfindungsgemäßer Vorrichtung auf der Gehäuseoberfläche von Verstärker und CD-Player;
- Fig. 27: Beschleunigungsamplituden-Frequenz-Spektrum von Gehäuseschwingungen an Tuner und CD-Player bei Wiedergabe der 57. Sekunde "Play with fire" - The Rolling Stones, Aufbau "Basis" jedoch mit dem CD-Player auf einem einfachen Tisch ohne Cerapuc-Stellfüsse, ohne eine erfindungsgemäße Vorrichtung auf der Gehäuseoberfläche von Verstärker und CD-Player;
- Fig. 28: Beschleunigungsamplituden-Frequenz-Spektrum von Gehäuseschwingungen an Tuner und CD-Player bei Wiedergabe der 57. Sekunde "Play with fire" - The Rolling Stones, Aufbau "Basis" jedoch mit dem CD-Player auf einem einfachen Tisch ohne Cerapuc-Stellfüsse, mit erfindungsgemäßer Vorrichtung auf der Gehäuseoberfläche von Verstärker und CD-Player;
- Fig. 29: Beschleunigungsamplituden-Frequenz-Spektrum von Gehäuseschwingungen an Tuner und CD-Player bei Sinus-Dauerton Wiedergabe 400 Hz Tuner Testsignal, Aufbau "Basis", ohne eine erfindungsgemäße Vorrichtung auf der Gehäuseoberfläche von Tuner und CD-Player;
- Fig. 30: Beschleunigungsamplituden-Frequenz-Spektrum von Gehäuseschwingungen an Tuner und CD-Player bei Sinus-Dauerton Wiedergabe 400 Hz Tuner Testsignal, Aufbau "Basis", mit erfindungsgemäßer Vorrichtung auf der Gehäuseoberfläche von Tuner und CD-Player;

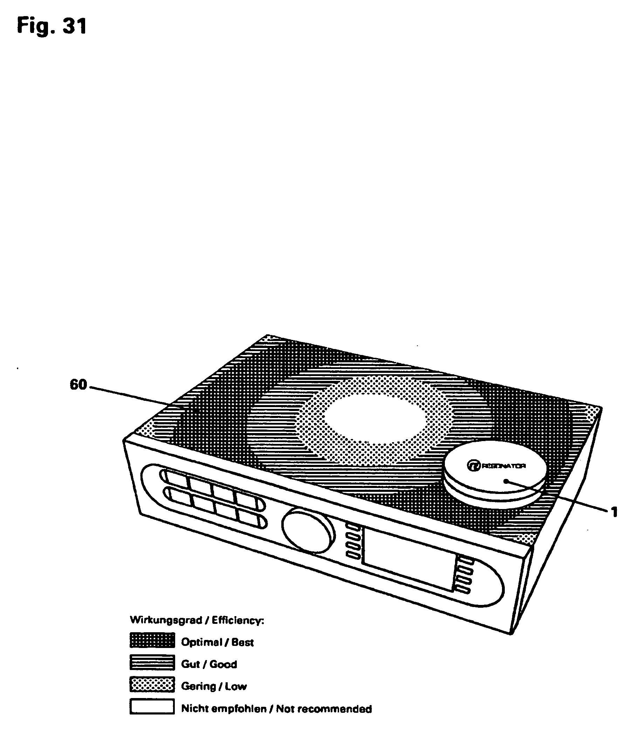

- Fig. 31: eine schematische Darstellung eines HiFi-Gerätes mit einer Legende für einen bevorzugten Aufstellungsort der erfindungsgemäßen Vorrichtung;

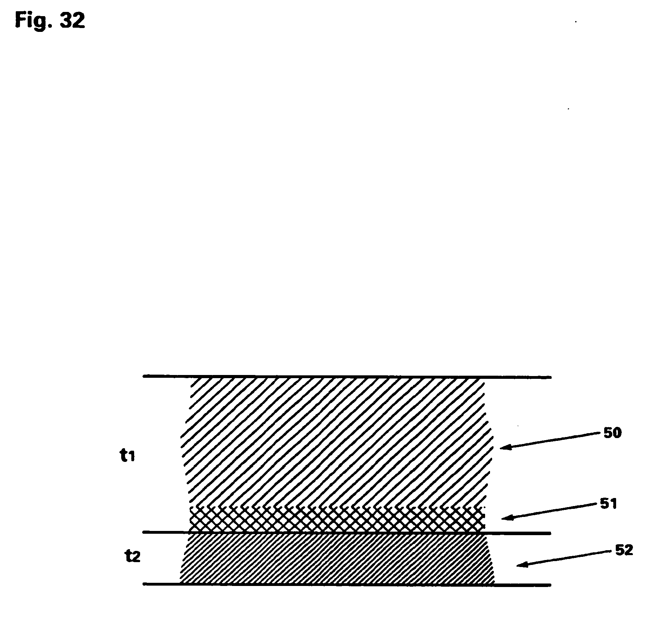

- Fig. 32: ein elastischer Balken mit einer Edelstahlschicht und einer eine Dämpfungsfolie in einer Querschnittsdarstellung;

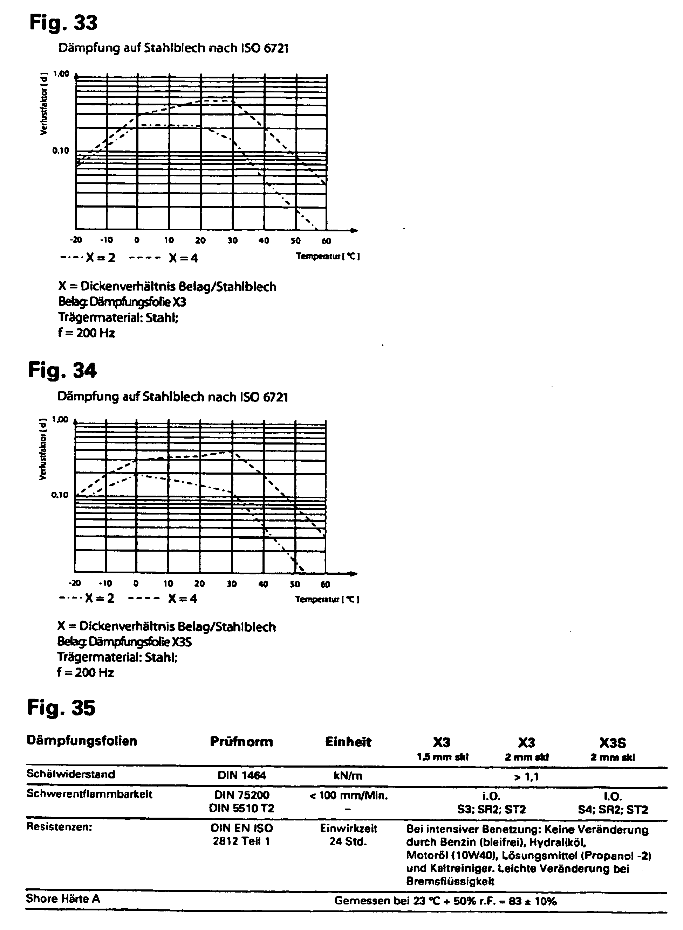

- Fig. 33: Verlustfaktor d in Abhängigkeit von der Temperatur einer Dämpfungsfolie des Typs "X3" auf Stahlblech, jeweils Dickenverhältnis Dämpfungsfolie / Stahlblech x = 2 bzw. x = 4, f = 200 Hz;
- Fig. 34: Verlustfaktord in Abhängigkeit von der Temperatur einer Dämpfungsfolie des Typs "X3S" auf Stahlblech, jeweils Dickenverhältnis Dämpfungsfolie / Stahlblech x = 2 bzw. x = 4, f = 200 Hz;
- Fig. 35: eine tabellarische Übersicht über Eigenschaften von Dämpfungsfolien, insbesondere des Typs "X3" und "X3S";

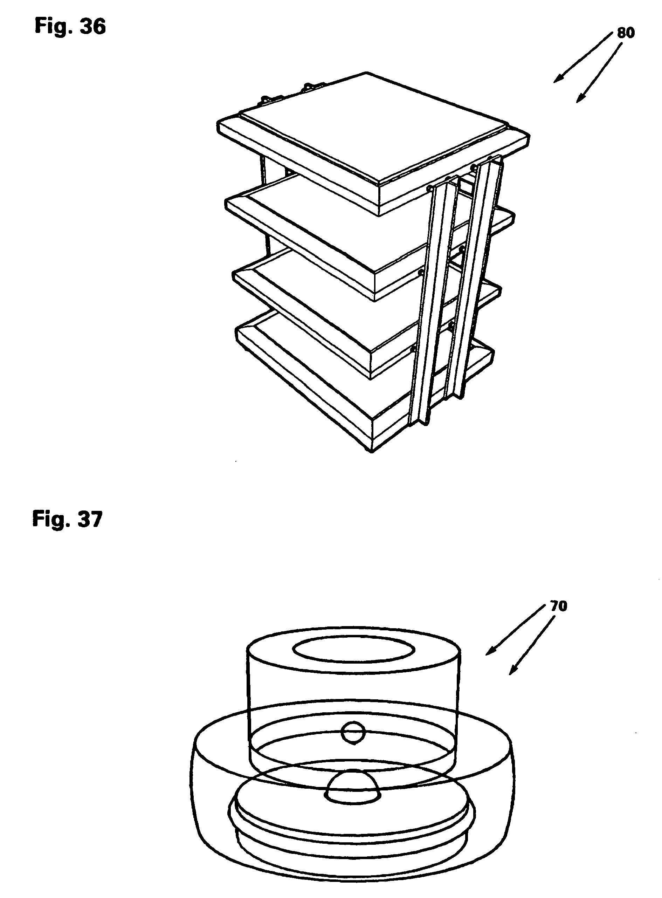

- Fig. 36: eine Darstellung eines verwendeten "Rack pagode master reference";
- Fig. 37: eine Darstellung eines "Cerapuc"-Stellfusses.

Es werden nachfolgende Bezugszeichen für die Figuren verwendet:
- 1: Vorrichtung zur Reduzierung von Klangstöreffekten von HiFi-Gerätegehäusen
- 2: Halterung
- 3: Resonator
- 4: Gehäuse der erfindungsgemäßen Vorrichtung
- 5: Innenraum

- 20: Grundkörper
- 21: erste Gewindestange
- 22: Mutter
- 23: zweite Gewindestange
- 24: Fußteil
- 25: Gewindebohrung
- 26: Gehäusekontaktfläche
- 27: Kragen
- 28: Nut
- 29: O-Ring

- 30: elastischer Balken
- 31: Bohrung
- 32: Resonatorstern

- 40: erste Gehäusehälfte
- 41: zweite Gehäusehälfte
- 42: Innengewinde
- 43: Außengewinde
- 44: Hülsenaufnahme
- 45: Kontakthülse
- 46: Durchgangsbohrung
- 47: Nut

- 50: Dämpfungsmaterial / Dämpfungsfolie
- 51: Klebeschicht
- 52: Edelstahlschicht

- 60: HiFi-Gerätegehäuse / Gehäuseplatte

- 70: Cerapuc

- 80: Rack

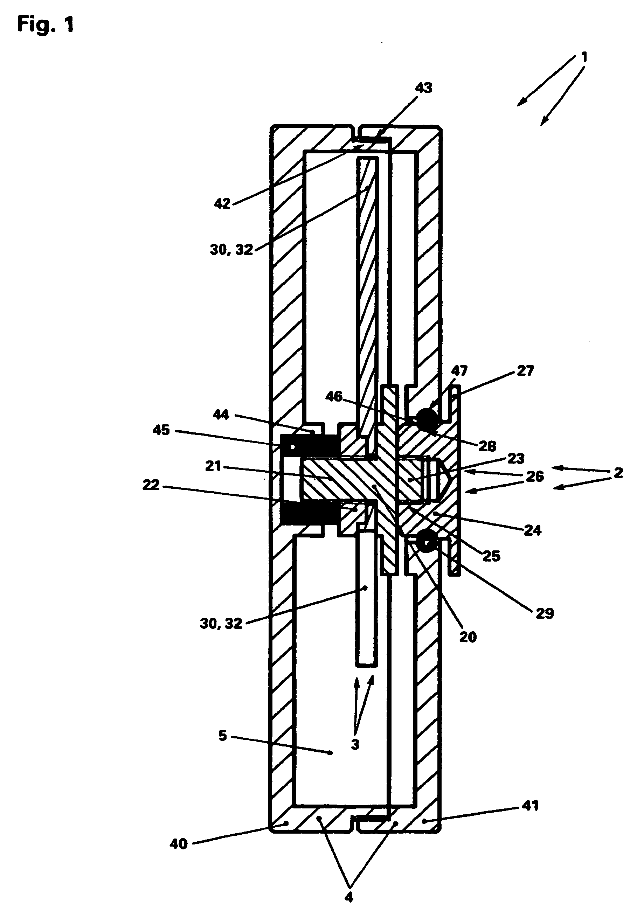

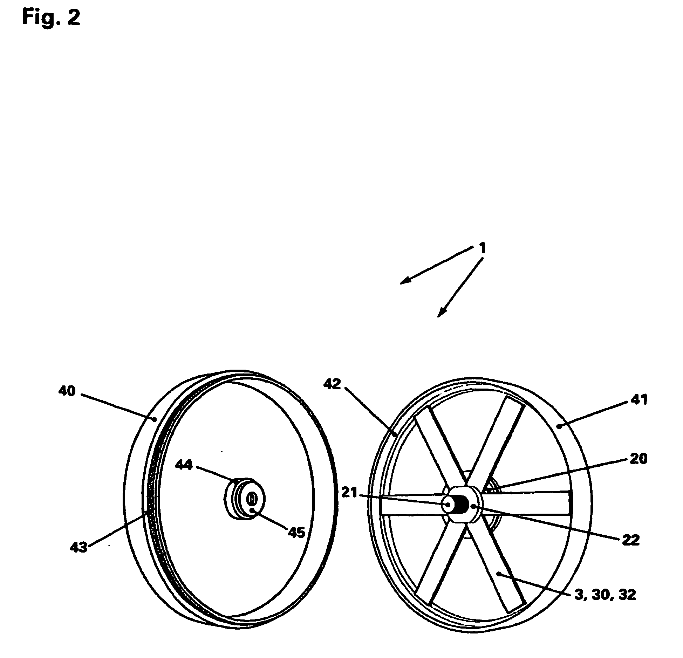

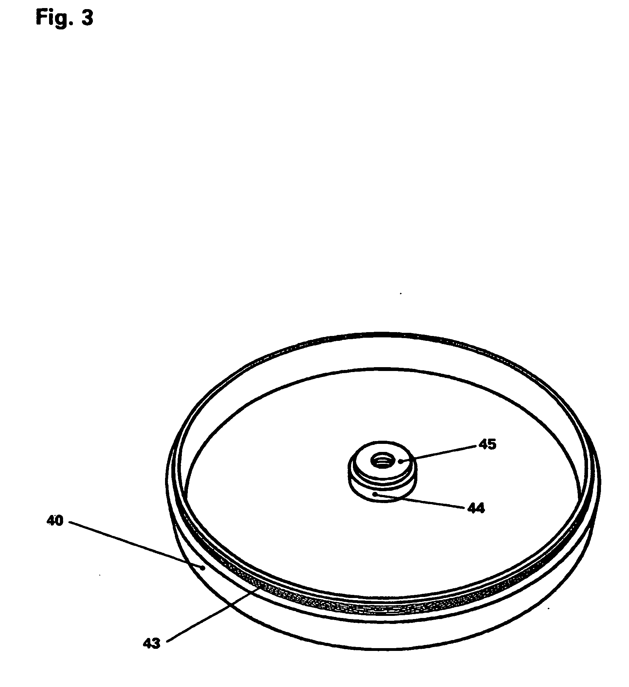

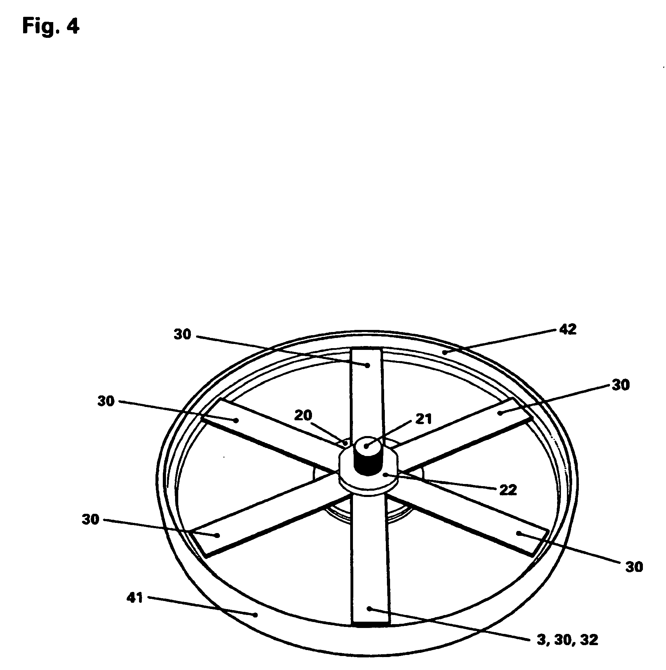

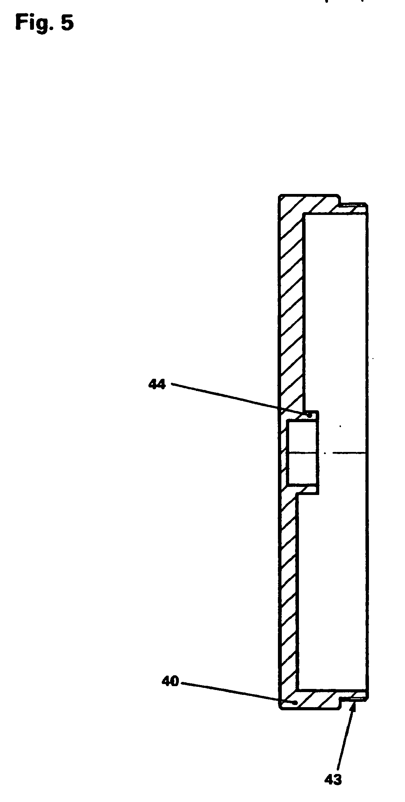

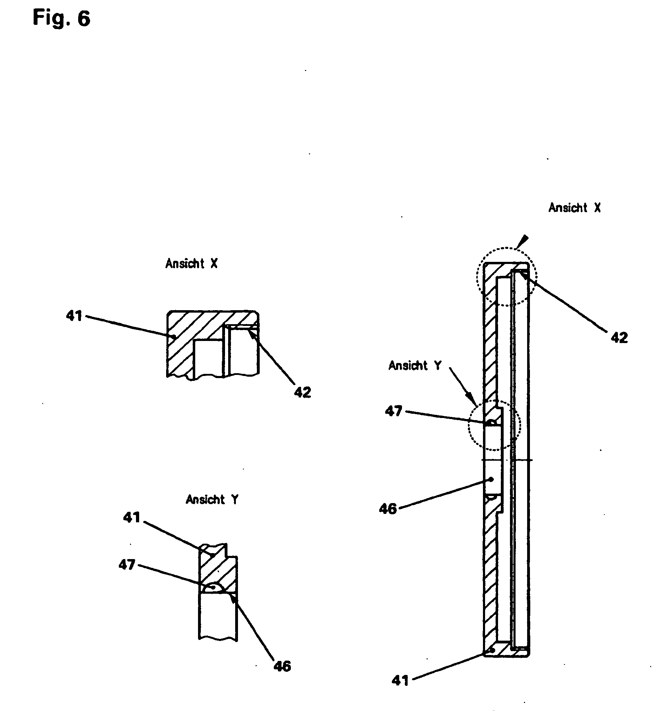

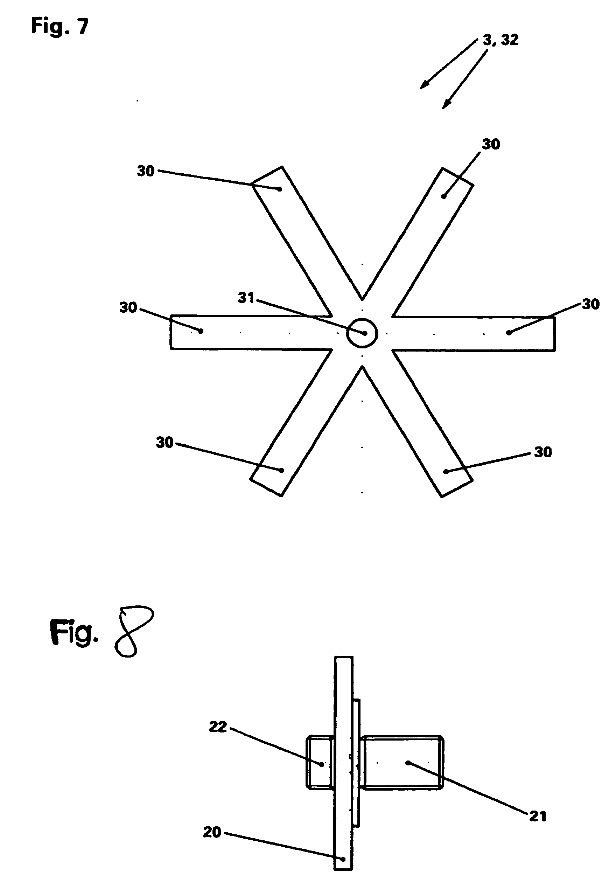

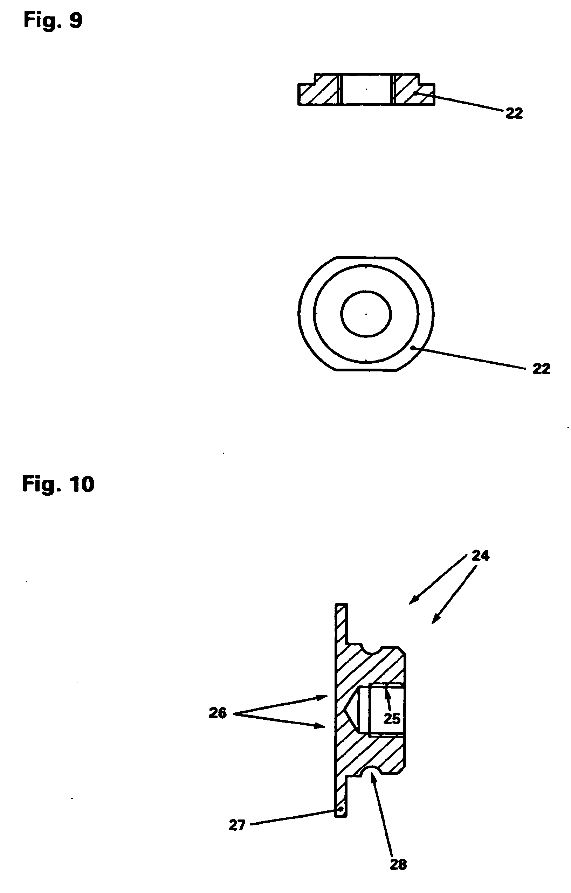

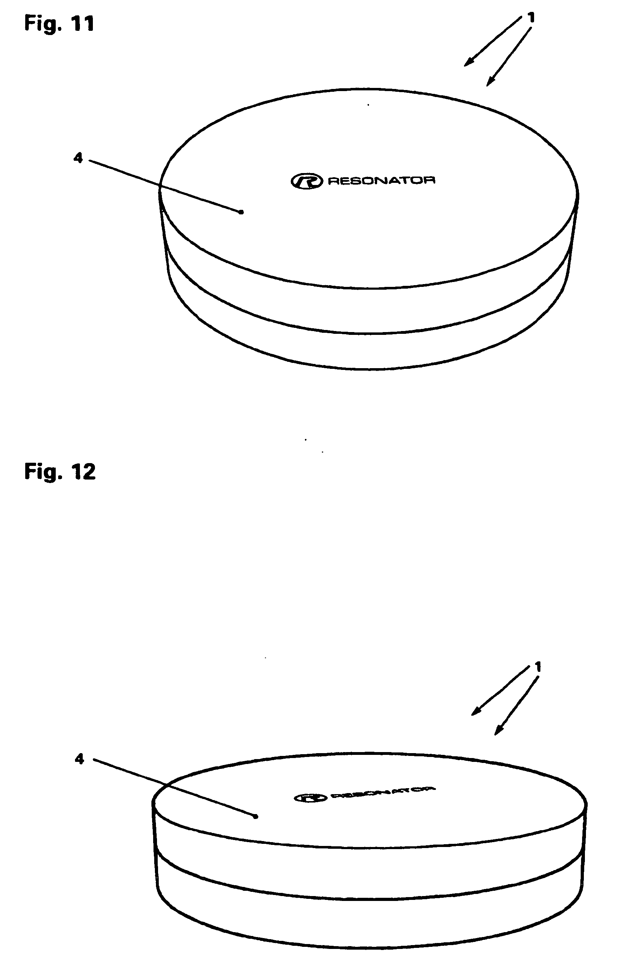

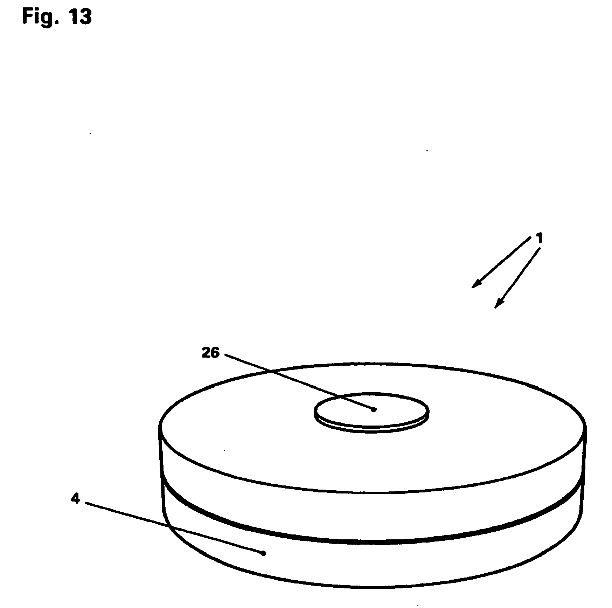

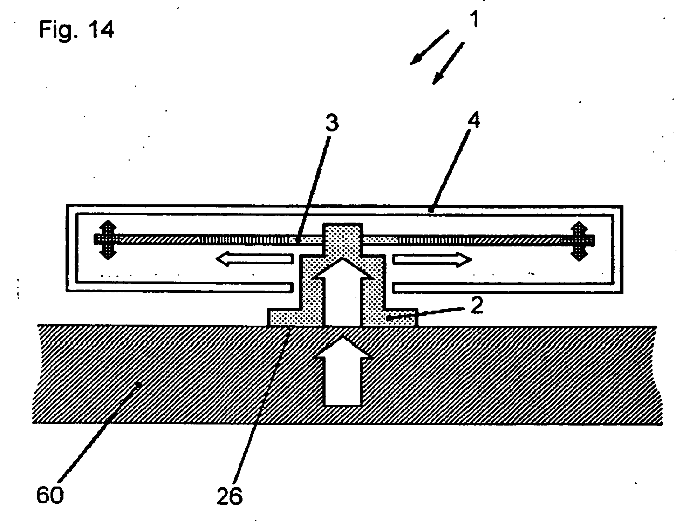

Zunächst wird insbesondere auf die Fig. 1 bis 15 Bezug genommen.

Ein erfindungsgemäße Vorrichtung 1 zur Umwandlung von Schwingungsenergie in Wärmeenergie umfasst im Wesentlichen einen Resonator 3 und eine Halterung 2, wobei die Halterung 2 mit einer Gehäusekontaktfläche 26 zur schwingungsübertragenden Verbindung mit dem HiFi-Gerätegehäuse 60 und einem Anschluss für den Resonator 3 ausgestattet ist.

Bei dem Resonator 3 handelt es sich grundsätzlich um ein schwingfähiges System, dessen Komponenten auf eine bestimmte Frequenz (Eigenresonanzfrequenz) in der Art abgestimmt sind, dass der Resonator 3 bei Anregung mit dieser Frequenz ausschwingt.

Der Resonator 3 umfasst mindestens ein in Schwingung versetzbares elastisches Element, welches hier als mindestens ein länglicher elastischer Balken 30, vorzugsweise als Edelstahlbalken ausgestaltet ist. Vorzugsweise sind eine Anzahl von in Schwingung versetzbaren elastischen Balken 30 vorgesehen. Die Anzahl der elastischen Balken 30 wird vorzugsweise von einem Resonatorstern 32 gebildet, der mit einer zentralen Bohrung 31 zum Anschluss an die Halterung 2 ausgestattet ist. Die elastischen Balken 30 erstrecken sich bei dem Resonatorstern 32 sternförmig von der zentralen Bohrung 31 und damit im montierten Zustand sternförmig von der Halterung 2.

Es kann ferner vorgesehen sein, dass der Resonator 3, insbesondere der Resonatorstern 32, zumindest abschnittsweise mit einer additiven Dämpfungsfolie 50 ausgestattet ist. Bei der verwendeten Dämpfungsfolie 50 handelt es sich im Wesentlichen um eine selbstklebende und/oder thermoplastische Kunststoffmatte mit einer Klebeschicht 51, insbesondere eine bitumenfreie Kunststoffmatte, mit anorganischen Füllstoffen zur Entdröhnung insbesondere von Stahl- und Aluminiumblechen sowie glasfaserverstärkten Kunststoffen. Der Resonator 3, insbesondere der Resonatorstern 32, weist bevorzugt eine erste Lage aus Edelstahl 52 mit einer Dicke von vorzugsweise t = 1 mm und eine Dämpfungsfolie 50, vorzugsweise des Typs "X3S", als zweite Lage mit einer Dicke von t = 2 mm auf. Die Eigenresonanzfrequenz des Resonators ist vorzugsweise berechnet auf 400 Hz, d.h. die Abmessungen und die Materialauswahl des mindestens einen elastischen Balkens 30, insbesondere des Resonatorsterns 32, ist derart ausgewählt, dass der Resonator 3 eine Eigenresonanzfrequenz von 400 Hz aufweist.

Die Dämpfungsfolie 50 ist auf die Balkenoberfläche, insbesondere auf der Resonatorsternoberfläche, aufgebracht, insbesondere aufgeklebt. Es kann aber auch vorgesehen sein, dass der mindestens eine Balken 30 zumindest abschnittsweise hohl ausgestaltet ist und Dämpfungslagen in dem Hohlraum angeordnet sind. Die additive Dämpfungsfolie 50 dient der breitbandigen Schwingungstilgung bei der Musikwiedergabe, zudem lassen sich, insbesondere durch die Auswahl der Dämpfungsfolie 50, auch unterschiedliche HiFi-Gerätegehäuse diverser Hersteller mit ihren verschiedenen Grundeigenfrequenzlagen der Gehäuseplatten beruhigen, d.h. deren Schwingungsenergie reduzieren.

Durch den zweilagigen Aufbau unter Einsatz der Dämpfungsfolie 50 auf Edelstahl 52 ergibt sich eine große Bandbreite des Frequenzwirkspektrums von etwa ± 25% bezogen auf 400 Hz, also 300 bis 500 Hz. Im Vergleich hätte ein Resonatorstern 32 in Edelstahl 52 ohne Dämpfungsfolie 50 nur eine Bandbreite von etwa ± 10%, also 360 bis 440 Hz.

Die Halterung 2 umfasst im Wesentlichen einen Träger und ein Fußteil 24.

Der Träger umfasst einen scheibenförmigen Grundkörper 20, von dem sich eine erste Gewindestange 21 senkrecht erstreckt. Die zentrale Bohrung 31 des Resonatorsterns ist auf die erste Gewindestange 21 aufgesteckt und eine Mutter 22 auf die Gewindestange aufgeschraubt. Der Resonatorstern 32 ist entsprechend zwischen dem scheibenförmigen Grundkörper 20 und der Mutter 22 fixiert. Es ist vorgesehen, die Kontaktfläche zwischen dem Träger und dem Resonatorstern 32 möglichst klein zu halten, so dass eine schnelle Schwingungsübertragung an den Resonator 3, insbesondere den Resonatorstern 32, erfolgen kann. Auch ergibt sich durch die Einspannung mittels der Mutter 22 auf dem scheibenförmigen Grundkörper 20 eine kraftschlüssige Einspannung des Resonators 3, insbesondere des Resonatorsterns 32.

Der Grundkörper 20 weist ferner eine zweite Gewindestange 23 auf, die sich auf der gegenüberliegenden Seite der ersten Gewindestange von dem scheibenförmigen Grundkörper 20 senkrecht erstreckt. Das im wesentlichen zylinderförmige Fußteil 24 wiederum umfasst eine Gewindebohrung 25, mit welcher das Fußteil 24 auf die zweite Gewindestange 23 aufgeschraubt ist. Das Fußteil 24 ist entsprechend über eine geeignete Verbindung, insbesondere eine Verbindung mittels Gewindestange 23 und Gewindebohrung 25, mit dem Grundkörper 20 verbunden, so dass die von dem Fußteil 24, insbesondere der Gehäusekontaktfläche 26, aufgenommenen Schwingungen des HiFi-Gerätegehäuses 60 auf den Resonator 3, insbesondere den Resonatorstern 32, übertragen werden können. Ferner umfasst das Fußteil 24 die Gehäusekontaktfläche 26, die vorzugsweise auf der der Gewindebohrung 25 gegenüberliegenden Seite des Fußteils 24 vorgesehen ist. Die Gehäusekontaktfläche 26 ist dazu geeignet, dass die erfindungsgemäße Vorrichtung 1 auf einem Gehäuse eines HiFi-Gerätes abgestellt werden kann. Die Gehäusekontaktfläche 26 kann beispielsweise mit einem umlaufenden Kragen 27 vergrößert sein, so dass die Gehäusekontaktfläche 26 größer als der Querschnitt des im Wesentlichen zylinderförmigen Fußteils 24 ausgestaltet ist.

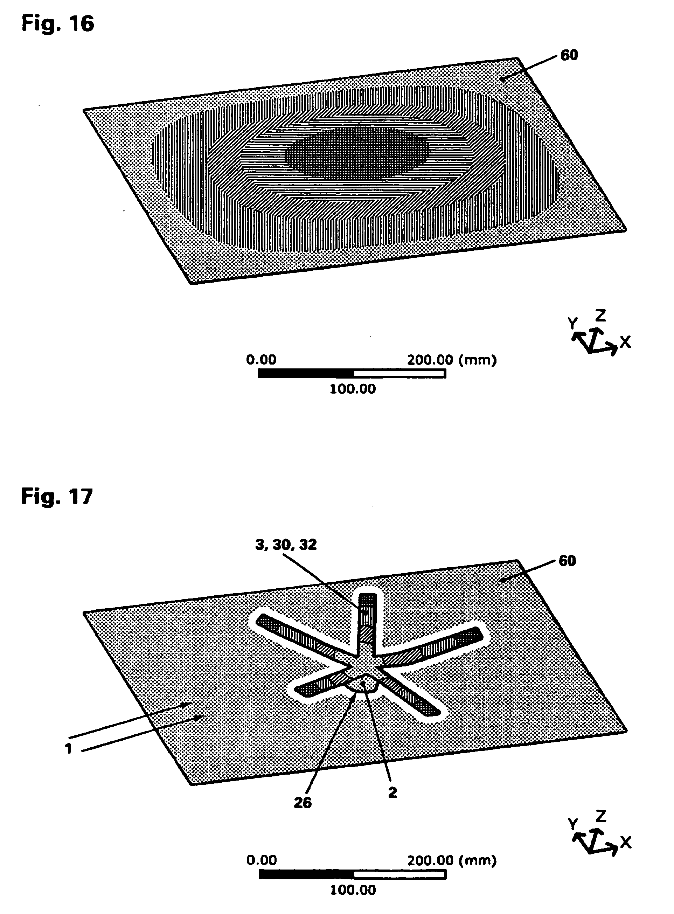

In Zusammenschau von Fußteil 24, Träger und Resonatorstern 32, ergibt sich die in Fig. 17 dargestellte erfindungsgemäße Vorrichtung 1 zur Reduzierung von Klangstöreffekten von HiFi-Gerätegehäusen in einer möglichen Ausführungsform, ohne ein noch näher zu beschreibendes Gehäuse. Die Halterung 2, insbesondere der Träger, stellt sicher, dass der Resonator 3, insbesondere der Resonatorstern 32, von der Gehäuseoberfläche 60 des HiFi-Gerätes beabstandet ist und dessen elastische Balken 30 frei schwingen können. Das Fußteil 24, insbesondere die Gehäusekontaktfläche 26, stellt sicher, dass die Gehäuseschwingungen zur Anregung des Resonators 3, insbesondere des Resonatorsterns 32, von der Gehäuseoberfläche 60 des HiFi-Gerätes auf den Resonator 3, insbesondere den Resonatorstern 32, übertragen werden können.

Darüber hinaus kann die erfindungsgemäße Vorrichtung 1 ein Gehäuse 4, vorzugsweise ein hohlzylinderförmiges Gehäuse 4, mit einem Innenraum 5 zur Aufnahme des Resonators 3, insbesondere des Resonatorsterns 32, aufweisen. Insofern ist der Resonator 3, insbesondere der Resonatorstern 32, vor Beschädigungen und/oder Verschmutzungen hinreichend geschützt, wobei jedoch sichergestellt ist, dass die elastischen Balken 30 frei schwingen können und Wärme in geeigneter Weise abgeleitet werden kann. Das Gehäuse 4 verhindert weiterhin die Abstrahlung des - wenn auch geringfügigen - Störschalls der durch die schwingenden Balken 30 (Resonatorflügel) erzeugt wird.

Das Gehäuse weist eine erste Gehäusehälfte 40 und eine zweite Gehäusehälfte 41 auf, die lösbar miteinander verbunden sind. Zur Verbindung der Gehäusehälften ist vorgesehen, dass die erste Gehäusehälfte 40 randseitig mit einem Außengewinde 43 und die zweite Gehäusehälfte 41 randseitig mit einem Innengewinde 42 ausgestattet ist. Das Außengewinde 43 kann entsprechend in das Innengewinde 42 eingedreht werden.

Der Träger ist durch das Verbindungsmittel derart in dem Innenraum des Gehäuses aufgenommen, dass die elastischen Balken 30 frei in dem Innenraum des Gehäuses schwingen können. Hierzu ist vorgesehen, dass der scheibenförmige Grundkörper 20 etwa in der Mitte des hohlzylinderförmigen Gehäuses angeordnet ist und sich die Balken 30 radial von der Mittelachse des hohlzylinderförmigen Gehäuses in den Innenraum 5 erstrecken.

Zur Verbindung der Halterung 2 mit dem Gehäuse ist ein Verbindungsmittel, insbesondere ein Verbindungsmittel vorgesehen, welches eine akustisch entkoppelte Verbindung zwischen Halterung und Gehäuse ermöglicht. Das Verbindungsmittel soll vermeiden, dass die über die Halterung auf den Resonator 3 übertragenen Schwingungen auch auf das Gehäuse 4 der erfindungsgemäßen Vorrichtung 1 übertragen werden.

Das Verbindungsmittel umfasst im Wesentlichen eine hohlzylinderförmige Kontakthülse 45, eine Durchgangsbohrung 46 mit einer umlaufenden Nut 47, einen O-Ring 29, sowie eine umlaufende Nut 28 in dem Fußteil 24.

Die hohlzylinderförmige Kontakthülse 45 ist auf der dem Innenraum zugewandten Seite der ersten Gehäusehälfte angebracht. Es ist vorgesehen, dass die erste Gehäusehälfte 40 mit einer geeigneten Hülsenaufnahme 44 zur Befestigung der Kontakthülse 45 ausgestattet ist. Die Halterung ist durch die Kontakthülse 45 mit dem Gehäuse, insbesondere mit der ersten Gehäusehälfte, verbunden. Hierzu ist vorgesehen, dass ein Abschnitt der ersten Gewindestange in der Kontakthülse 45 aufgenommen ist. Bei der Kontakthülse 45 handelt es sich vorzugsweise um eine elastische Kunststoffhülse, vorzugsweise um eine Moosgummihülse.

Ferner ist die Halterung über das Fußteil 24 mit dem Gehäuse, insbesondere mit der zweiten Gehäusehälfte, verbunden. Hierzu ist der O-Ring 29 abschnittsweise in der Nut des Fußteils 24 und abschnittsweise in der Nut der Durchgangsbohrung 46 aufgenommen. Entsprechend fixiert der elastische O-Ring 29 das Fußteil 24 in der Durchgangsbohrung 46. Es ist vorgesehen, dass es sich bei dem O-Ring 29 um einen elastischen O-Ring 29 aus Kunststoff, vorzugsweise aus Gummi, handelt.

Es ist ferner vorgesehen, dass ein Abschnitt des Fußteils 24, insbesondere die Gehäusekontaktfläche 26, ein Stück weit aus dem Gehäuse hervorsteht, so dass die erfindungsgemäße Vorrichtung 1 auf dem Fußteil 24, insbesondere der Gehäusekontaktfläche 26, auf dem HiFi-Gerätegehäuse abgestellt werden kann, wobei gleichermaßen sichergestellt ist, dass die Schwingungen des HiFi-Gerätegehäuses auf die Halterung, insbesondere das Fußteil 24, nicht jedoch auf das Gehäuse der erfindungsgemäßen Vorrichtung 1 übertragen werden.

Das Gehäuse, insbesondere die Gehäusehälften, sind vorzugsweise aus Aluminium gefertigt. Auch ist das Gehäuse möglichst dünnwandig ausgestaltet, einerseits um eine Gewichtsersparnis zu erreichen und andererseits um zu vermeiden, dass durch das Gehäuse ein "zweiter" Resonator 3 entsteht, der parallel zu dem eigentlichen Resonator 3 geschaltet wäre.

Die Kombination von Halterung 2, Resonator 3 und Gehäuse ergibt ein Gesamtgewicht von etwa 370 g zur verbesserten Ankopplung an die zu bedämpfende Geräteoberseite des HiFi-Gerätes.

Auch kann, wie oben bereits angedeutet, auf das Gehäuse, insbesondere die dosenförmige Ummantelung, vollständig verzichtet werden, falls beispielsweise eine designtechnisch ansprechende Gestaltung der elastischen Balken 30, insbesondere des Resonatorsterns 32, hervorgehoben werden soll. Gerade hier bietet es sich an, auf Hohlbalken mit integrierten Dämpfungslagen zurückzugreifen.

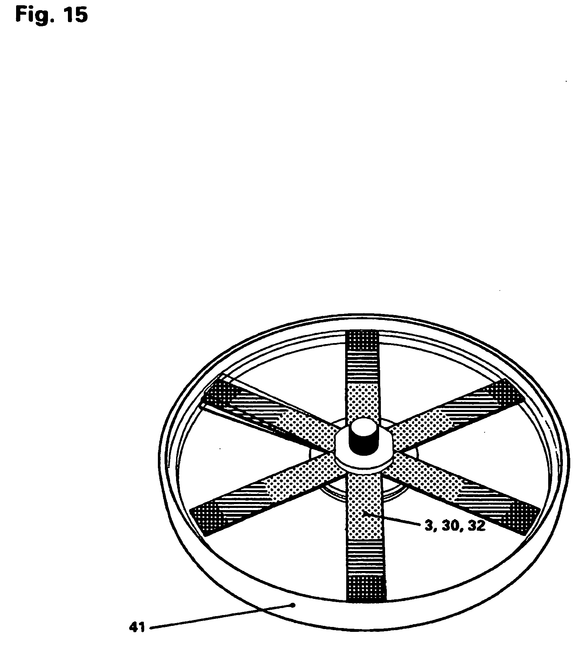

In Fig. 15 ist nur die Schwingung eines Balkens 30 angedeutet, es versteht sich jedoch, dass in der Regel alle Balken 30 schwingen, sofern sie entsprechend angeregt werden.

Weitere Details der vorgeschlagenen Vorrichtung 1 ergeben sich aus einer Funktionsbeschreibung, insbesondere unter Bezugnahme auf die Fig. 16 bis 30.

Die wesentlichen funktionalen Komponenten der erfindungsgemäßen Vorrichtung 1 stellen die Halterung 2 und der Resonator 3, insbesondere der Resonatorstern 32, dar. Die Halterung 2 kann grundsätzlich auf die "zu beruhigende" Oberfläche, beispielsweise eines CD-Player-Gehäuses gestellt werden, wobei die Halterung 2 ferner sicherstellt, dass die elastischen Balken 30, insbesondere der Resonatorstern 32, von der Oberfläche des HiFi-Gerätegehäuses 60 beabstandet sind und frei schwingen können. Durch diese Maßnahme stellt sich folgender Effekt ein.

Der Resonator 3, insbesondere der Resonatorstern 32, der erfindungsgemäßen Vorrichtung 1 stellt im Vergleich zur Gehäuseplatte 60 des Verstärkers oder CD-Players eine kleinere Masse dar, welche breitbandig die Plattenschwingungsenergie übernehmen und sie ohne akustische oder mechanische Rückkopplungseffekte in Wärmeenergie umwandeln kann. Dieser Effekt beruht auf dem Energieminimumsprinzip, nach dem bei Anregung zweier in Reihe angeordneter elastischer Strukturen mit unterschiedlichen Massen das System mit der kleineren Masse die kinetische Energie des Systems mit der größeren Masse übernimmt und in Wärme transferiert, sofern die Eigenfrequenz des kleineren Systems auf die Anregungsfrequenz - im Resonanzfall auf die Eigenfrequenz - des größeren Systems abgestimmt ist. Der Energieverlust der größeren Masse, hier die der Gehäuseplatte 60 des HiFi-Gerätes, führt zur Minimierung des klangstörenden Rückkopplungseffektes.

Die Wirkung der erfindungsgemäßen Vorrichtung 1 lässt sich anhand einer Gegenüberstellung von Messungen der Beschleunigungsamplituden in Abhängigkeit von der Frequenz an HiFi-Gerätegehäusen 60, jeweils ohne und mit der erfindungsgemäßen Vorrichtung 1.

Fig. 16 zeigt die Computersimulation eines HiFi-Gerätedeckels 60 während der Anregung seiner Grundeigenfrequenz. Es sollte entsprechend die schwingende Gehäuseplatte 60 eines HiFi-Gerätes simuliert werden. Die unterschiedlichen Füllmuster stellen dabei Regionen mit unterschiedlichen Beschleunigungsamplituden dar. Die Schwingungsamplituden nehmen von der Mitte der Gehäuseplatte 60 zum Rand hin ab. Die Füllmuster sind selbstverständlich nur schematisch zu verstehen, die Amplitude fällt selbstverständlich nicht von Füllmuster zu Füllmuster mit einer Flankensteilheit von 90° ab, noch sind die Amplituden innerhalb eines Füllmusters konstant.

In Fig. 17 ist nunmehr die Gehäuseplatte 60 eines HiFi-Gerätes gemäß Fig. 16 dargestellt, jedoch mit einer erfindungsgemäßen Vorrichtung 1. Die Schwingungsenergie der Gehäuseplatte 60 eines HiFi-Gerätes ist vollständig reduziert, was in Fig. 17 dadurch angedeutet ist, dass keine unterschiedlichen Füllmuster auf der Oberfläche eingezeichnet sind. Es kann auch davon gesprochen werden, dass die Platte 60 nunmehr "beruhigt" ist. Andererseits ist durch die unterschiedlichen Füllmuster in den Balken 30 des Resonators 3 angedeutet, dass die Balken 30 schwingen, insbesondere an den freien Enden mit einer größeren Auslenkung als auf der der Resonatorbefestigung zugewandten Seite.

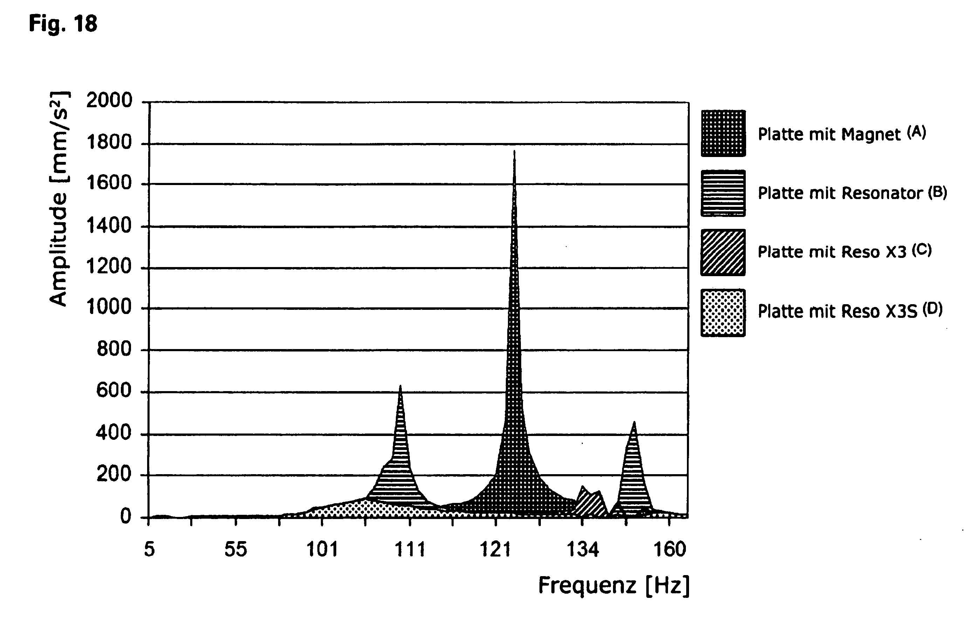

In Fig. 18 sind nunmehr die Beschleunigungsamplituden der Gehäuseplatte 60 (aus Fig. 16) bei breitbandiger, musikalischer Anregung über der Frequenz aufgetragen, jeweils bei unterschiedlichen Rahmenbedingungen.

Der Verlauf A dokumentiert die Beschleunigungsamplituden über der Frequenz bei einem auf der Gehäuseplatte eines HiFi-Gerätes aufgelegten Magneten, zur Simulation der eingangs erwähnten Maßnahme, die Gehäuseoberfläche 60 mit einer Masse zu beruhigen.

Der Verlauf B repräsentiert den Verlauf der Beschleunigungsamplituden der Gehäuseplatte 60 eines HiFi-Gerätes mit einer nichtgedämpftenerfindungsgemäßen Vorrichtung 1, bei der entsprechend keine Dämpfungsfolie auf den Edelstahlbalken aufgebracht ist. Die erfindungsgemäße Vorrichtung 1 hinterlässt dabei noch Nachbarresonanzen.

Der Verlauf C repräsentiert den Verlauf der Beschleunigungsamplituden der Gehäuseplatte 60 eines HiFi-Gerätes mit einer erfindungsgemäßen Vorrichtung 1, dessen elastische Balken 30 mit einer additiven Dämpfung ausgestattet sind. Als additive Dämpfung ist hier Dämpfungsfolie 50 des Typs "X3" vorgesehen. Durch die additive Dämpfung der Balken 30 können insbesondere Nachbarresonanzen getilgt werden.

Der Verlauf D repräsentiert den Verlauf der Beschleunigungsamplituden der Gehäuseplatte eines HiFi-Gerätes mit einer erfindungsgemäßen Vorrichtung 1, dessen elastische Balken 30 mit einer additiven Dämpfung ausgestattet sind. Als additive Dämpfung ist hier Dämpfungsfolie 50 des Typs "X3S" vorgesehen. Durch die Additivdämpfung der Balken 30 können insbesondere Nachbarresonanzen in einem noch größerem Maß getilgt werden.

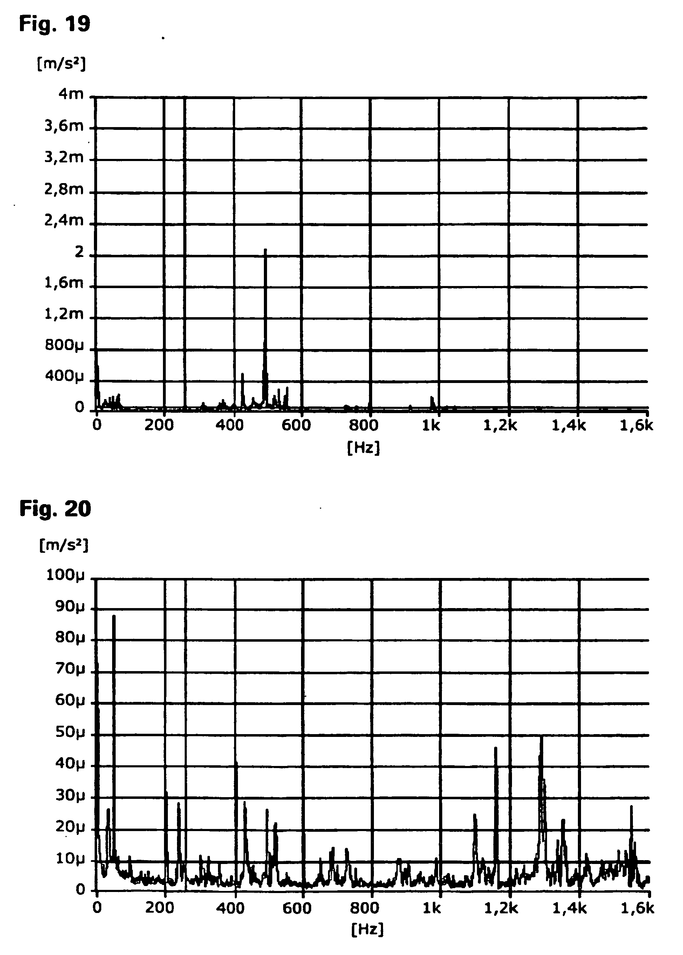

In den Fig. 19 und 20 sind die Ergebnisse von Messungen der klangstörenden Rückkopplungseffekte mit einem Beschleunigungssensor auf der Gehäuseoberfläche 60 des HiFi-Gerätes während der Musikwiedergabe, jeweils ohne und mit einer erfindungsgemäßen Vorrichtung 1 auf der Gehäuseoberfläche 60 dargestellt. Im Vergleich der Messergebnisse aus Fig. 19 mit denen aus Fig. 20 zeigt sich eine Magnitudenreduktion von 2100 µm/s² (Fig. 19) auf 28 µm/s² (Fig. 20). Dies entspricht einer Magnitudenreduktion von etwa 98,66 % durch die erfindungsgemäße Vorrichtung 1, bezogen auf eine maximale Störschallfrequenzlage bei 500 Hz.

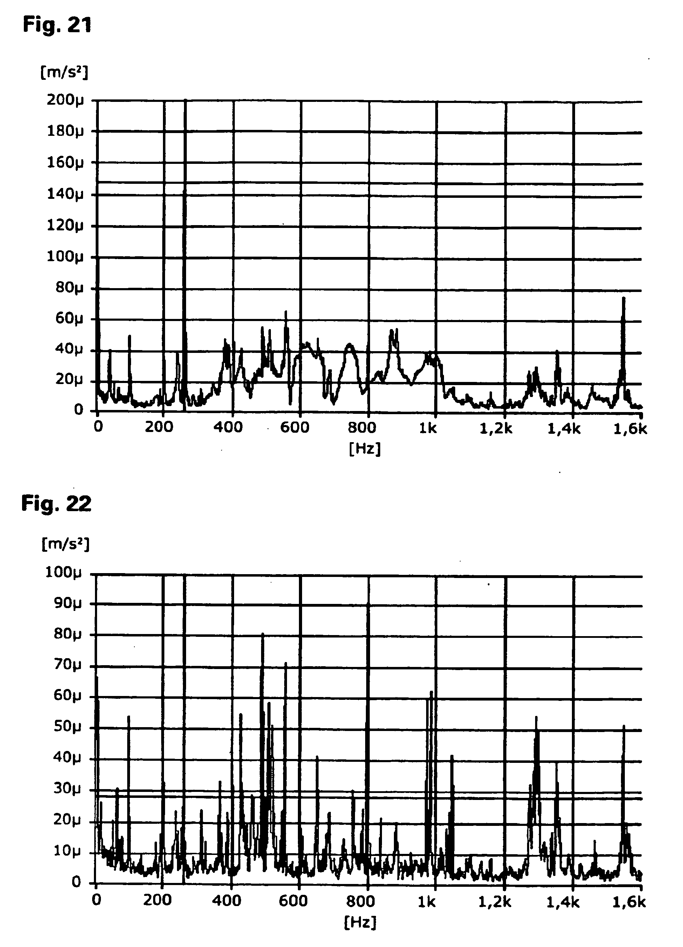

Bei Anwendung weiterer klangoptimierender Maßnahmen, wie beispielsweise der Gerätepositionierung auf einem High-End-Rack pagode master reference 80 und Cerapuc-Stellfüssen 70 zwischen dem Geräteboden und der Rackplatte aus dem finite-elemente-Programm, bewirkt die Adaption der erfindungsgemäßen Vorrichtung 1 eine Magnitudenreduktion von 148 µm/s² auf 28 µm/s² entsprechend 81 %, hier bezogen auf eine maximale Störschallfrequenz bei 260 Hz. Diese Einschätzung ergibt sich aus einem Vergleich der Fig. 21 und 22.

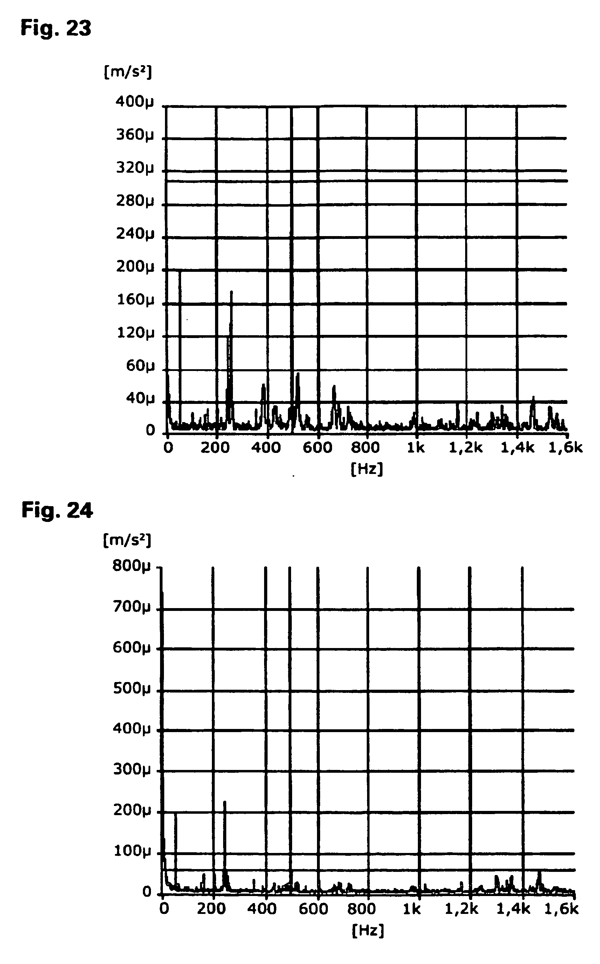

In den Fig. 23 bis 30 sind nunmehr weitere Ergebnisse aus einem Produkttest mit einem Basisaufbau von HiFi-Komponenten und der erfindungsgemäßen Vorrichtung 1 zusammengestellt.

Der Testaufbau "Basis" umfasste grundsätzlich eine "Basis-Audiokette" mit
- einem Verstärker, Typ "Lindemann 2",
- einem CD-Player, Typ "audio agile joker",
- einem Tuner, Typ "Luxman T1",
die auf einem "Rack pagode master reference" 80 mit "Cerapuc"-Stellfüssen 70 aufgenommen sind, sowie
- ein Lautsprecherpaar, Typ "audio physic Step" auf "finite elemente - Ständer", sowie
- Kabel Typ "Monster"

Es wurden folgende Testprozeduren, insbesondere Gehäuseschwingungsmessungen, durchgeführt.
a) Messkette aus PCB-Beschleunigungssensor auf Oberseite Joker-Chassis (CD-Player) vorne mittig bzw. Luxman-Chassis (Tuner) ebenda,
b) Messsystem PULSE von Brüel&Kjaer zur A/T-Wandlung und FFT-Analyse, Laptop mit Schwingungsanalysesoftware LAPSHOP von B&K,
c) Output: Beschleunigungsamplituden-Frequenz-Spektren.

Der genauen Positionen der erfindungsgemäßen Vorrichtungen auf den Gehäusen waren (Testaufbau 1, 2 und 3):
- auf dem Deckel des CD-Players, vorne rechts etwa im Drittelspunkt von Länge und Tiefe,
- auf dem Deckel des Verstärkers, vorne rechts etwa im Drittelspunkt von Länge und Tiefe,

Die genaue Position des Beschleunigungssensors war auf dem Deckel des CD-Players vorne mittig, etwa im Viertelspunkt der Tiefe.

Die Testresultate lassen sich wie folgt zusammenfassen.

### A. Messung der Gehäuseschwingungen

### Testaufbau 1 (Basis):

Die Gehäuseschwingungen bei der Wiedergabe der 57. Sekunde des Liedes "Play with Fire" von den "The Rolling Stones", mit dem zuvor skizzierten Testaufbau, ohne eine erfindungsgemäße Vorrichtung 1, stellen sich als Beschleunigungsamplitude über der Frequenz wie in Fig. 23 abgebildet dar. Werden mit identischem Testaufbau erfindungsgemäße Vorrichtungen 1 auf dem Verstärkergehäuse und dem CD-Player Gehäuse platziert, ergibt sich ein Spektrum wie in Fig. 24 abgebildet. Durch die erfindungsgemäße Vorrichtung 1 lässt sich in dem hier gewählten Testaufbau eine beachtliche Magnitudenreduktion von etwa 84 % bei 500 Hz erreichen.

### Testaufbau 2:

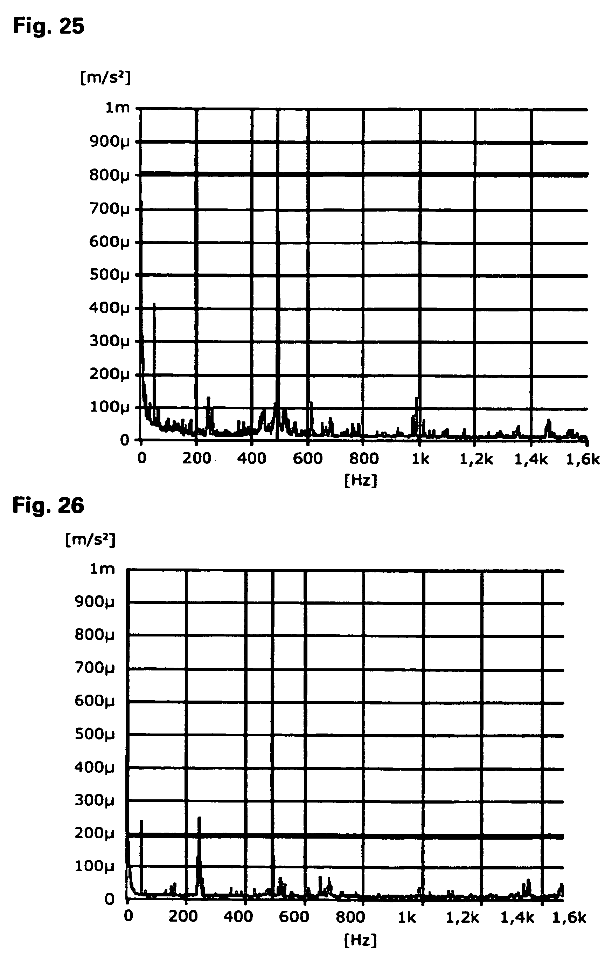

In einem weiteren Versuch wurde der Testaufbau 1 geringfügig verändert, indem die "Cerapuc"-Stellfüsse 70 weggelassen wurden. Ansonsten wurde auch auf diesem modifizierten Testaufbau die 57. Sekunde des Liedes "Play with Fire" von den "The Rolling Stones" abgespielt, jeweils ohne (Fig. 25) und mit (Fig. 26) einer erfindungsgemäßen Vorrichtung 1 auf dem Verstärker und dem CD-Player. Ohne eine erfindungsgemäße Vorrichtung 1 ergaben sich Beschleunigungsamplituden über der Frequenz gemäß Fig. 25. Mit demselben Testaufbau, jedoch mit jeweils erfindungsgemäßen Vorrichtungen 1 auf dem Verstärker und dem CD-Player, ergab sich ein Beschleunigungsamplituden-Frequenz Spektrum der gemessenen Gehäuseschwingungen wie in Fig. 26 abgebildet. Unter den vorgenannten Testbedingungen konnte eine Magnitudenreduktion von etwa 78 % bei 500 Hz durch den Einsatz der erfindungsgemäßen Vorrichtung 1 festgestellt werden.

### Testaufbau 3:

Ein weiterer Versuch wurde mit einem weiteren modifizierten Testaufbau durchgeführt, bei dem der CD-Player auf einem einfachem Tisch ohne "Cerapuc"-Stellfüsse 70 abgestellt wurde.

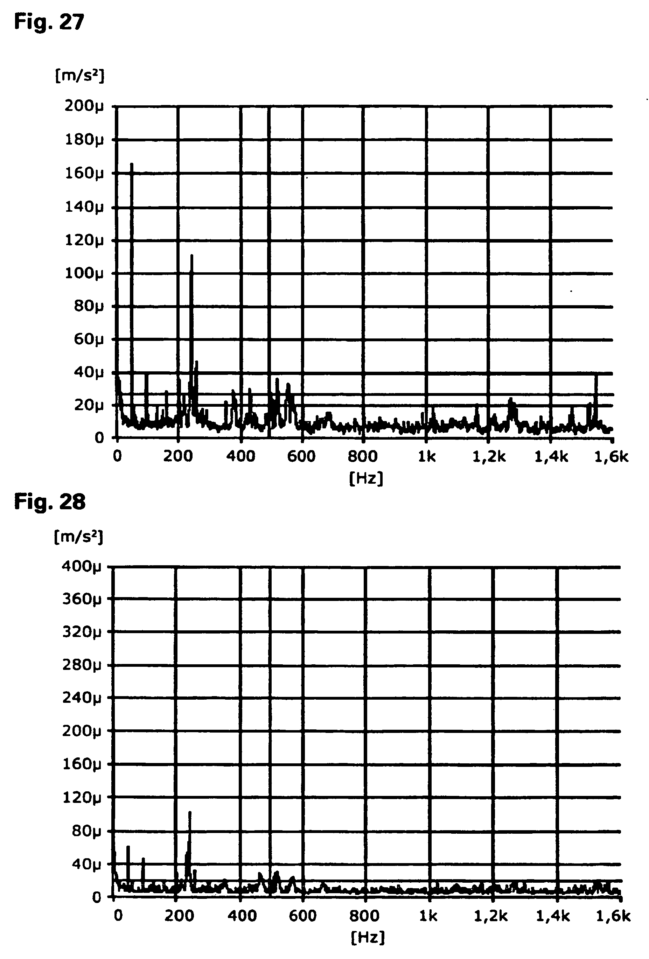

Wiederum ohne eine erfindungsgemäße Vorrichtung 1 auf dem Verstärker und dem CD-Player ergaben sich bei der Wiedergabe der 57. Sekunde des Liedes "Play with Fire" von den "The Rolling Stones" Gehäuseschwingungen an Verstärker und CD-Player gemäß Fig. 27. Mit jeweils einer erfindungsgemäßen Vorrichtung 1 auf dem Verstärker und dem CD-Player ergaben sich Gehäuseschwingungen wie in Fig. 28 dargestellt. Unter den vorgenannten Testbedingungen konnte eine Magnitudenreduktion von etwa 64 % bei 50 Hz durch den Einsatz der erfindungsgemäßen Vorrichtung 1 festgestellt werden.

### Testaufbau 4:

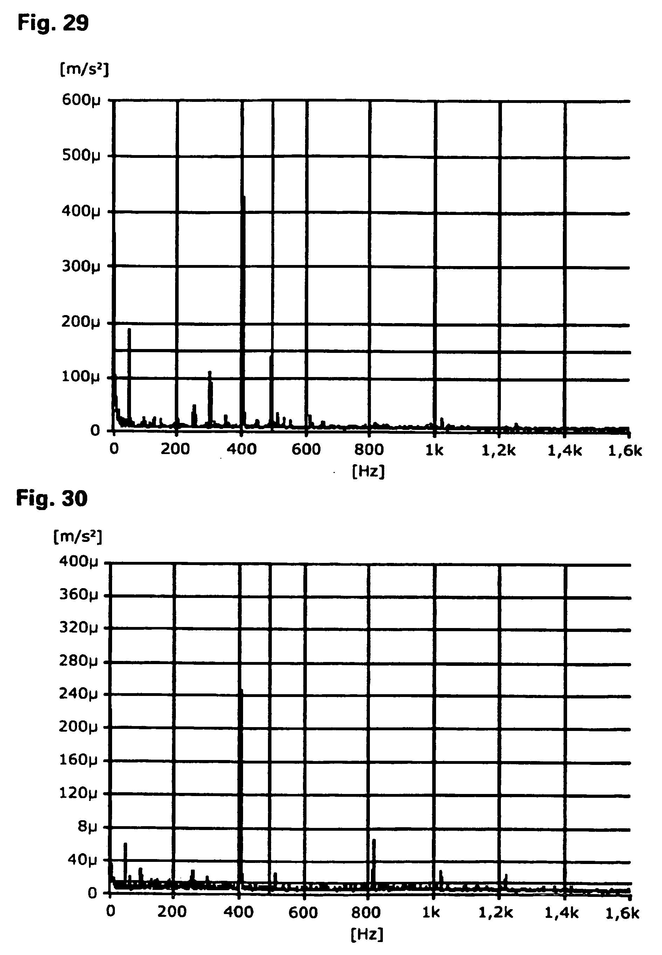

Der Testaufbau 4 entsprach dem Testaufbau 1, wobei statt der Wiedergabe der 57. Sekunde des Liedes "Play with Fire" von den "The Rolling Stones", eine Sinus-Dauerton-Wiedergabe des 400 Hz-Tuner-Testsignal gewählt wurde. Durch die vorgenommene Beschallung ließen sich Gehäuseschwingungen auf dem Gehäuse des Tuners gemäß Fig. 29 messen. Soweit der Verstärker und der Tuner mit einer erfindungsgemäßen Vorrichtung 1 ausgestattet worden sind, stellte sich das Schwingungsverhalten, ebenfalls bei einer Anregung mit einem Sinus Dauerton von 400 Hz, wie in Fig. 30 dar. Es war eine auf die erfindungsgemäßen Vorrichtung 1 zurückzuführende Magnitudenreduktion von etwa 42 % bei 400 Hz festzustellen.

Der genaue Aufbau beim Sinus-Signal-Test (Testaufbau 4) war:
- eine erfindungsgemäße Vorrichtung auf dem Gehäusedeckel des Tuners, vorne rechts etwa im Drittelspunkt von Länge und Tiefe;
- eine erfindungsgemäße Vorrichtung auf dem Gehäusedeckel des Verstärkers, vorne rechts etwa im Drittelspunkt von Länge und Tiefe;
- Beschleunigungssensor auf dem Gehäuse des Tuners, vorne mittig, im Tiefenviertelspunkt.

### B. Hörtest

Der Hörtest wurde mit dem Testaufbau "Basis", jeweils ohne und mit einer erfindungsgemäßen Vorrichtung 1 auf dem Verstärker und dem CD-Player im Wechsel nach jedem Track durchgeführt. Als Musik CD wurde das Live-Album "Live at Massey-Hall" von Neil Young verwendet.

Es ergaben sich nachfolgende Höreindrücke mit jeweils einer erfindungsgemäßen Vorrichtung 1 auf Verstärker und CD-Player im Vergleich ohne jeweils eine erfindungsgemäße Vorrichtung 1 auf Verstärker und CD-Player.

Bei Track 4, "Journey through the Past", war das verbale Intro verständlicher, der Gesang deutlicher und das Klavier klarer und klanglich schöner.

Bei Track 5, "Helpless" war der Gesang deutlicher und das Klatschen bekam einen besseren Klang und hob die Atmosphäre. Die Gitarre wurde sehr deutlich, verlor dabei aber nicht an "Lagerfeueratmosphäre".

Bei Track 7, "A Man needs a Maid / Heart of Gold Suite" wurden Gesang und Klavier wesentlich deutlicher. Es erfolgte kein "Erschrecken" bei plötzlichem Lauterwerden.

Bei Track 14, "See the Sky about the Rain" wurde die Atmosphäre des Liedes noch besser. Es konnte ferner festgestellt werden, dass, falls bei der Klavierpassage die Augen geschlossen wurden, die Atmosphäre noch besser gefühlt werden konnte.

### C. Fazit

Die erfindungsgemäße Vorrichtung 1 arbeitet breitbandeffizient und reduziert die Schwingungsamplituden der HiFi-Gerätegehäuse 60 deutlich. Bei Bewertung der Maximalamplitude des jeweiligen Messaufbaus als primäre Klangstörgröße wurde diese im Versuchsmittel um 61 % reduziert.

Der Hörtest-Ausgangszustand (Testaufbau 1 jeweils ohne erfindungsgemäße Vorrichtungen 1 zur Reduzierung von Schwingungsenergie) befand sich mit der Cerapuc 70-gestützten Kette bereits auf klanglich hohem Niveau, dennoch war eine weitere klangliche Qualitätssteigerung zur angenehmen Klarheit deutlich wahrnehmbar. Das als generell schwierig wiederzugebende Klavier gewann an angenehmer Präzision deutlich hinzu.

Beachtlicherweise konnten die erfindungsgemäßen Vorrichtungen zur Reduzierung von Klangstöreffekten des gesamten Testaufbaus beitragen, obgleich die erfindungsgemäßen Vorrichtungen lediglich auf dem Verstärker und dem CD-Player (Musiktests) oder dem Tuner und dem CD-Player (Sinustest) platziert waren.

## Patentansprüche

1. Vorrichtung (1) zur Reduzierung von Klangstöreffekten von HiFi-Gerätegehäusen (60), wobei
- die Vorrichtung (1) mindestens einen Resonator (3) und eine Halterung (2) aufweist, wobei
- die Halterung (2) mit einer Gehäusekontaktfläche (26) zur schwingungsübertragenden Verbindung mit dem HiFi-Gerätegehäuse (60) und einem Anschluss für den Resonator (3) ausgestattet ist, wobei
- der Resonator (3) mindestens einen länglichen elastischen Balken (30) umfasst,
**dadurch gekennzeichnet, dass**
- mindestens einer der Balken (30) zumindest abschnittsweise mit einem additiven Dämpfungsmaterial ausgestattet ist, wobei
- das Dämpfungsmaterial als Dämpfungsfolie (50) auf dem elastischen Balken (30) aufgebracht ist, oder dass es sich um einen zumindest abschnittsweise hohlen Balken (30) handelt, wobei das Dämpfungsmaterial (50) innerhalb des Hohlraums angebracht ist.

2. Vorrichtung (1) nach Anspruch 1, **dadurch gekennzeichnet, dass** es sich bei dem Resonator (3) um einen Resonatorstern (32) handelt, umfassend eine zentrale Bohrung (31) zum Anschluss an die Halterung (2) und eine sternförmige Anordnung von länglichen elastischen Balken (30).

3. Vorrichtung (1) nach einem der vorhergehenden Ansprüche, **dadurch gekennzeichnet, dass** der Balken (30) eine erste Lage aus Edelstahl (52) mit einer Dicke von vorzugsweise t = 1 mm und eine zweiten Lage aus einer Dämpfungsfolie (50) mit einer Dicke von t = 2 mm aufweist.

4. Vorrichtung (1) nach Anspruch 2, **dadurch gekennzeichnet, dass** die Halterung (2) einen Träger und ein Fußteil (24) umfasst, wobei der Träger einen scheibenförmigen Grundkörper (20) und eine erste Gewindestange (21) und eine zweite Gewindestange (23) aufweist, wobei das Fußteil (24) eine Gewindebohrung (25) und die Gehäusekontaktfläche (26) aufweist, wobei der Resonatorstern (32) mit der Bohrung (31) auf die erste Gewindestange (21) aufgesteckt ist und mit einer Mutter (22) fixiert ist, wobei das Fußteil (24) auf die zweite Gewindestange (23) aufgeschraubt ist.

5. Vorrichtung (1) nach einem der vorhergehenden Ansprüche, **dadurch gekennzeichnet, dass** die Vorrichtung (1) ein Gehäuse (4), vorzugsweise ein hohlzylinderförmiges Gehäuse (4), mit einem Innenraum (5) zur Aufnahme des Resonators (3) aufweist.

6. Vorrichtung (1) nach Anspruch 5, **dadurch gekennzeichnet, dass** die Vorrichtung (1) ein Gehäuse (4), vorzugsweise ein hohlzylinderförmiges Gehäuse (4), mit dem Innenraum (5) zur Aufnahme des mindestens einen elastischen Balkens (30) aufweist.

7. Vorrichtung (1) nach Anspruch 5, **dadurch gekennzeichnet, dass** die Vorrichtung (1) ein Gehäuse (4), vorzugsweise ein hohlzylinderförmiges Gehäuse (4), mit dem Innenraum (5) zur Aufnahme eines Resonatorsterns (32), der den Resonator (3) bildet, aufweist.

8. Vorrichtung (1 ) nach einem der Ansprüche 5 bis 7, **dadurch gekennzeichnet, dass** das Gehäuse (4) eine erste Gehäusehälfte (40) und eine zweite Gehäusehälfte (41) aufweist, wobei die Gehäusehälften (41, 42) lösbar miteinander verbunden sind.

9. Vorrichtung (1) nach einem der Ansprüche 5 bis 8, **dadurch gekennzeichnet, dass** das Gehäuse (4) über ein Verbindungsmittel mit der Halterung (2) verbunden ist, welches eine akustisch entkoppelte Verbindung zwischen Halterung (2) und Gehäuse (4) ermöglicht.

10. Vorrichtung (1) nach Anspruch 9, **dadurch gekennzeichnet, dass** das Verbindungsmittel eine hohlzylinderförmige Kontakthülse (45), insbesondere eine elastische Kunststoffhülse, eine Durchgangsbohrung (46) mit einer umlaufenden Nut (47) in einer zweiten Gehäusehälfte (41), die einen Teil des Gehäuses (4) bildet, einen O-Ring (29), insbesondere einen Gummiring, sowie eine umlaufende Nut (28) in einem Fußteil (24), das einen Teil der Halterung (2) bildet, umfasst, wobei die hohlzylinderförmige Kontakthülse (45) auf der dem Innenraum (5) zugewandten Seite einer ersten Gehäusehälfte (40), die ebenfalls einen Teil des Gehäuses bildet, angebracht ist und ein Abschnitt einer ersten Gewindestange (21), die einen Teil eines Trägers der Halterung (2) bildet, in der Kontakthülse (45) aufgenommen ist, wobei die Halterung (2) über das Fußteil (24) mit dem Gehäuse (4), insbesondere mit der zweiten Gehäusehälfte (41), verbunden ist, wobei der O-Ring (29) abschnittsweise in der Nut (28) des Fußteils (24) und abschnittsweise in der Nut (47) der Durchgangsbohrung (46) aufgenommen ist.

11. Vorrichtung (1 ) nach Anspruch 10, **dadurch gekennzeichnet, dass** das Fußteil (24) zumindest abschnittsweise aus der Durchgangsbohrung (46) herausragt, wobei die Gehäusekontaktfläche (26) von der Gehäuseoberfläche des Gehäuses (4) der Vorrichtung (1) beabstandet ist.

12. Vorrichtung (1) nach einem der vorhergehenden Ansprüche, **dadurch gekennzeichnet, dass** die Eigenresonanzfrequenz des Resonators (3) auf die Anregungsfrequenz des HiFi-Gerätegehäuses (60) abgestimmt ist, insbesondere 400 Hz beträgt.

13. Verwendung einer Vorrichtung (1) gemäß einem der Ansprüche 1 bis 12, **dadurch gekennzeichnet, dass** die erfindungsgemäße Vorrichtung (1) zur Reduzierung von Klangstöreffekten von HiFi-Gerätegehäusen (60) verwendet wird.

## Claims

1. Apparatus (1) for reducing sound-perturbing effects in hi-fi appliance housings (60),
wherein
- the apparatus (1) has at least one resonator (3) and a mount (2), wherein
- the mount (2) is equipped with a housing contact area (26) for vibration-transmitting connection to the hi-fi appliance housing (60) and with a connection for the resonator (3), wherein
- the resonator (3) comprises at least one elongated elastic bar (30),
**characterized in that**
- at least sections of at least one of the bars (30) are equipped with an additive damping material, wherein
- the damping material is applied as a damping film (50) on the elastic bar (30), or **in that** a bar (30) which is hollow at least in sections is involved, the damping material (50) being fitted inside the cavity.

2. Apparatus (1) according to Claim 1, **characterized in that** the resonator (3) is a resonator star (32), comprising a central hole (31) for connection to the mount (2) and a star-shaped arrangement of elongated elastic bars (30).

3. Apparatus (1) according to one of the preceding claims, **characterized in that** the bar (30) has a first layer of stainless steel (52) with a thickness of preferably t = 1 mm and a second layer of a damping film (50) with a thickness of t = 2 mm.

4. Apparatus (1) according to Claim 2, **characterized in that** the mount (2) comprises a support and a base portion (24), wherein the support has a disc-shaped basic body (20) and a first threaded rod (21) and a second threaded rod (23), wherein the base portion (24) has a threaded hole (25) and the housing contact area (26), wherein the resonator star (32) has had the hole (31) put onto the first threaded rod (21) and is fixed by means of a nut (22), wherein the base portion (24) is screwed onto the second threaded rod (23).

5. Apparatus (1) according to one of the preceding claims, **characterized in that** the apparatus (1) has a housing (4), preferably a hollow cylindrical housing (4), having an interior (5) for holding the resonator (3).

6. Apparatus (1) according to Claim 5, **characterized in that** the apparatus (1) has a housing (4), preferably a hollow cylindrical housing (4), having the interior (5) for holding the at least one elastic bar (30).

7. Apparatus (1) according to Claim 5, **characterized in that** the apparatus (1) has a housing (4), preferably a hollow cylindrical housing (4), having the interior (5) for holding a resonator star (32) which forms the resonator (3).

8. Apparatus (1) according to one of the Claims 5 to 7, **characterized in that** the housing (4) has a first housing half (40) and a second housing half (41), wherein the housing halves (41, 42) are detachably connected to one another.

9. Apparatus (1) according to one of Claims 5 to 8, **characterized in that** the housing (4) is connected to the mount (2) by means of a connecting means which allows an acoustically decoupled connection between the mount (2) and the housing (4).

10. Apparatus (1) according to Claim 9, **characterized in that** the connecting means comprises a hollow cylindrical contact sleeve (45), particularly an elastic plastic sleeve, a through-hole (46) with a circumferential groove (47) in a second housing half (41), which forms a part of the housing (4), an 0-ring (29), particularly a rubber ring, and also a circumferential groove (28) in a base portion (24), which forms a part of the mount (2), wherein the hollow cylindrical contact sleeve (45) is fitted on that side of a first housing half (40), which as well forms a part of the housing, which faces the interior (5), and a section of a first threaded rod (21), which forms a part of the support of the mount (2), is held in the contact sleeve (45), wherein the mount (2) is connected to the housing (4), particularly to the second housing half (41), by means of the base portion (24), wherein the 0-ring (29) has sections held in the groove (28) of the base portion (24) and sections held in the groove (47) of the through-hole (46).

11. Apparatus (1) according to Claim 10, **characterized in that** at least sections of the base portion (24) protrude from the through-hole (46), wherein the housing contact area (26) is at a distance from the housing surface of the housing (4) of the apparatus (1).

12. Apparatus (1) according to one of the preceding claims, **characterized in that** the natural resonant frequency of the resonator (3) is attuned to the excitation frequency of the hi-fi appliance housing (60), in particular is 400 Hz.

13. Use of an apparatus (1) according to one of Claims 1 to 12, **characterized in that** the apparatus (1) according to the invention is used to reduce sound-perturbing effects in hi-fi appliance housings (60).

## Revendications

1. Dispositif (1) pour réduire les effets sonores parasites des boîtiers d'appareils Hifi (60),
- le dispositif (1) présentant au moins un résonateur (3) et un support (2),
- le support (2) étant équipé d'une surface de contact de boîtier (26) destinée à une liaison de transmission des oscillations avec le boîtier d'appareil Hifi (60) et d'un raccord pour le résonateur (3),
- le résonateur (3) comprenant au moins une barre (30) élastique oblongue,
**caractérisé en ce**
- **qu'**au moins l'une des barres (30) est équipée au moins dans certaines sections d'un matériau amortissant additif,
- le matériau amortissant étant appliqué sur la barre élastique (30) sous la forme d'un film amortissant (50), ou en ce qu'il s'agit d'une barre (30) creuse au moins dans certaines sections, le matériau amortissant (50) se trouvant à l'intérieur de l'espace creux.

2. Dispositif (1) selon la revendication 1, **caractérisé en ce que** le résonateur (3) est une étoile de résonance (32) comprenant un forage central (31) pour le raccordement au support (2) et un arrangement en forme d'étoile de barres (30) élastiques oblongues.

3. Dispositif (1) selon l'une des revendications précédentes, **caractérisé en ce que** la barre (30) présente une première couche en acier inoxydable (52) ayant une épaisseur de préférence t = 1 mm et une deuxième couche constituée d'un film amortissant (50) ayant une épaisseur t = 2 mm.

4. Dispositif (1) selon la revendication 2, **caractérisé en ce que** le support (2) comprend un élément porteur et un socle (24), l'élément porteur présentant un corps de base (20) en forme de disque et une première tige filetée (21) ainsi qu'une deuxième tige filetée (23), le socle (24) présentant un trou taraudé (25) et la surface de contact de boîtier (26), l'étoile de résonance (32) étant emmanchée avec l'forage (31) sur la première tige filetée (21) et étant fixée avec un écrou (22), le socle (24) étant vissé sur la deuxième tige filetée (23).

5. Dispositif (1) selon l'une des revendications précédentes, **caractérisé en ce que** le dispositif (1) présente un boîtier (4), de préférence un boîtier (4) de forme cylindrique creuse avec un espace intérieur (5) pour accueillir le résonateur (3).

6. Dispositif (1) selon la revendication 5, **caractérisé en ce que** le dispositif (1) présente un boîtier (4), de préférence un boîtier (4) de forme cylindrique creuse avec l'espace intérieur (5) pour accueillir l'au moins une barre (30) élastique.

7. Dispositif (1) selon la revendication 5, **caractérisé en ce que** le dispositif (1) présente un boîtier (4), de préférence un boîtier (4) de forme cylindrique creuse avec l'espace intérieur (5) pour accueillir une étoile de résonance (32) qui forme le résonateur (3).

8. Dispositif (1) selon l'une des revendications 5 à 7, **caractérisé en ce que** le boîtier (4) présente une première moitié de boîtier (40) et une deuxième moitié de boîtier (41), les moitiés de boîtier (40, 41) étant assemblées de manière amovible l'une avec l'autre.

9. Dispositif (1) selon l'une des revendications 5 à 8, **caractérisé en ce que** le boîtier (4) est relié avec le support (2) par le biais d'un moyen d'assemblage, lequel permet une liaison à découplage acoustique entre le support (2) et le boîtier (4).

10. Dispositif (1) selon la revendication 9, **caractérisé en ce que** le moyen d'assemblage comprend un manche de contact (45) de forme cylindrique creuse, notamment un manche en matière plastique élastique, un forage de traversée (46) muni d'une rainure périphérique (47) dans une deuxième moitié de boîtier (41), qui forme une partie du boîtier (4), un joint torique (29), notamment une bague en caoutchouc, ainsi qu'une rainure périphérique (28) dans un socle (24), qui forme une partie du support (2), le manche de contact (45) de forme cylindrique creuse étant monté sur le côté d'une première moitié de boîtier (40), qui aussi forme une partie du boîtier, qui fait face à l'espace intérieur (5) et une section d'une première tige filetée (21), qui forme une partie d'un élément porteur du support (2), étant accueillie dans le manche de contact (45), le support (2) étant relié avec le boîtier (4) par le biais du socle (24), notamment avec la deuxième moitié de boîtier (41), le joint torique (29) étant accueilli par certaines sections dans la rainure (28) du socle (24) et par certaines sections dans la rainure (47) du forage de traversée (46).

11. Dispositif (1) selon la revendication 10, **caractérisé en ce que** le socle (24) dépasse au moins par certaines sections hors de l'forage de traversée (46), la surface de contact de boîtier (26) étant espacée de la surface de boîtier du boîtier (4) du dispositif (1).

12. Dispositif (1) selon l'une des revendications précédentes, **caractérisé en ce que** la fréquence de résonance propre du résonateur (3) est accordée sur la fréquence d'excitation du boîtier d'appareil Hifi (60), est notamment égale à 400 Hz.

13. Utilisation d'un dispositif (1) selon l'une des revendications 1 à 12, **caractérisé en ce que** le dispositif (1) selon l'invention est utilisé pour réduire les effets sonores parasites des boîtiers d'appareils Hifi (60).
